# EUROPEAN PATENT APPLICATION

(11) **EP 4 246 853 A1**
(43) Date of publication of application: **20.09.2023**
(21) Application number: 23160958.7
(22) Date of filing: 09.03.2023
(51) Int. Cl.: H04L 5/00, H04L 5/14

(54) **CONFIGURATION AND IDENTIFICATION FOR ADVANCED DUPLEX SYSTEM**

(30) Priority: 16.03.2022 US 202263320530 P; 02.11.2022 US 202263421709 P
(71) Applicant: INTEL Corporation, Santa Clara, CA 95054 (US)
(72) Inventor: CHATTERJEE, Debdeep, San Jose, 95128 (US); PANTELEEV, Sergey, Maynooth, W23 T86C (IE); XIONG, Gang, Portland, 97229 (US); LI, Yingyang, Beijing, 100032 (CN); WANG, Yi, Beijing, 10000 (CN)
(74) Representative: Viering, Jentschura & Partner mbB Patent- und Rechtsanwälte

(57) **Abstract**

Various aspects relating to the field of wireless communications are provided in this disclosure. An apparatus of a User Equipment (UE) for mobile communication, the apparatus including a radio frequency (RF) interface and one or more processors coupled to the RF interface, the one or more processors configured to: identify, from a base station, information representative of an uplink and downlink (UL/DL) resource configuration related to a full duplex communication with the base station; identify a sub-band of a plurality of sub-bands of a carrier bandwidth as one of a sub-band for DL or a sub-band of UL, based on the UL/DL resource configuration; cause the UE to receive or transmit within a resource of the sub-band based on the identification of the sub-band

## Description

### TECHNICAL FIELD

Various embodiments generally may relate to the field of wireless communications.

### BACKGROUND

Mobile communication has evolved significantly from early voice systems to today's highly sophisticated integrated communication platform. The next generation wireless communication system, 5G, or new radio (NR), and developing wireless mobile communication technologies may provide access to information and sharing of data anywhere, anytime by various users and applications.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary illustration for non-overlapping sub-band full duplex (NOSB-FD)-based DL/UL resource allocation in a serving cell;
FIG. 2 shows an exemplary illustration of a set of carriers with different subcarrier spacings;
FIG. 3 shows an exemplary illustration of carriers with different SCSs using a reference;
FIGs. 4A and 4B show exemplary illustrations for carriers with different SCSs respectively;
FIG. 5 shows an exemplary illustration of a sub-band configuration within a frequency region;
FIG. 6 shows an exemplary illustration of a sub-band configuration;
FIG. 7 shows an exemplary illustration of a resource configuration;
FIG. 8 shows an exemplary illustration of a resource configuration;
FIGs. 9A, 9B, and 9C show exemplary illustrations for different guard band associated configurations;
FIG. 10 illustrates a network in accordance with various embodiments;
FIG. 11 schematically illustrates a wireless network in accordance with various embodiments;
FIG. 12 is a block diagram illustrating components, according to some example embodiments;
FIG. 13 illustrates a network in accordance with various embodiments;
FIG. 14 shows an example of a method;
FIG. 15 shows an example of a method.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

Time Division Duplex (TDD) may be used in commercial NR deployments. In TDD, the time domain resource is split between downlink (DL) and uplink (UL) symbols. Allocation of a limited time duration for the uplink in TDD can result in reduced coverage and increased latency for a given target data rate. To improve the performance for UL in TDD, simultaneous transmission/reception of downlink and uplink respectively, also referred to as "full duplex communication" may be considered. In this regard, the case of Non-Overlapping Sub-Band Full Duplex (NOSB-FD) at the base station (gNB) may be considered.

For NOSB-FD, within a carrier bandwidth, some bandwidth can be allocated as UL, while some bandwidth can be allocated as DL within the same symbol, however the UL and DL resources may be non-overlapping in frequency domain. Under this operational mode, at a given symbol a gNB can simultaneously transmit DL signals and receive UL signals, while a user equipment (UE) may only transmit or receive at a time.

For a UE not aware of support of NOSB-FD at the gNB, the UE may only identify DL or UL resources in a symbol. For a UE that may be provided with the information of NOSB-FD operations at gNB, the UE may identify both DL and UL resources in a symbol. Embodiments herein relate to the determination of DL and UL resources according to the information of NOSB-FD operations at gNB.

Specifically, embodiments relate to signaling design and a mechanism to identify DL and UL resource for a NOSB-FD system. Embodiments may include or relate to one or more of the following:
How to indicate UL/DL/Flexible resource by higher layer signaling;
How to indicate UL/DL/Flexible resource by dynamic signaling, e.g., slot format indicator (SFI);
How to identify UL/DL/Flexible resource according to the signaling;
How to identify guard band;
Interaction between DL/UL resource configuration.

Embodiments may enable flexible resource configuration and efficient operation in full duplex system.

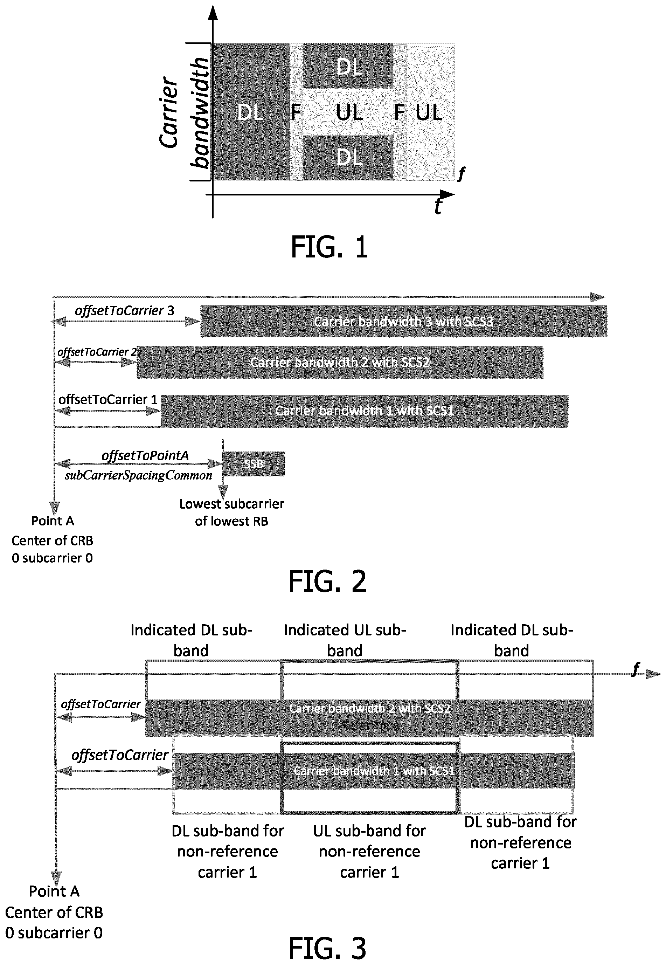

FIG. 1 shows an exemplary illustration for non-overlapping sub-band full duplex (NOSB-FD)-based DL/UL resource allocation in a serving cell. For a serving cell with NOSB-FD operation, some symbols may only be used to map either DL or UL physical channels or signals (denoted as DL/UL/Flexible symbol), while some other symbols may be used to map both DL and UL physical channels or signals in the same symbol (denoted as "symbol with potential NOSB-FD operation"). Thus, for a given PRB in a symbol with potential NOSB-FD operation, the resources may be identified as DL, UL, or flexible resources as illustrated in FIG. 1. In one example, frequency resources within a symbol may be divided into DL/UL/Flexible resources in different non-overlapped sub-bands. As used herein, a "sub-band" corresponds to a set of physical resources within a carrier that are contiguous in frequency, e.g., a number of consecutive Physical Resource Blocks (PRBs) on the Common Resource Block (CRB) grid.

The configuration of sub-bands may be provided to a UE via explicit or implicit configuration. In one option, the sub-band configuration can be provided to the UE via UE-specific Radio Resource Control (RRC) signaling. In another option, the sub-band configuration can be provided to the UE via system information (SI), e.g., in RMSI (SIB1). In another option, the sub-band configuration can be provided to the UE via slot format information in DCI, e.g., SFI by DCI 2_0 or a new group common DCI format. In the following, the description is based on SFI, but all the corresponding description is also applicable to any new slot format information in DCI, e.g., a new group common or UE-specific DCI format carrying sub-band configuration information. In yet another option, the sub-band configuration is not explicitly provided to UEs, and a UE supporting NOSB-FD follows higher layer cell-specific or UE-specific TDD configurations, if provided, and/or any higher-layer configured transmission or reception occasions, and/or dynamic signaling (e.g., scheduling DCI formats or DCI format 2_0) to determine link direction for one or more PRBs in a given number of symbols or slots.

### DL/UL resource configuration by cell specific higher layer signaling

For a serving cell with NOSB-FD operation, the sub-band (SB) configuration can be provided to the UE via cell specific higher layer signaling, e.g., in SIB1.

FIG. 2 shows an exemplary illustration of a set of carriers with different subcarrier spacings.

A sub-band corresponds to a set of physical resources within a carrier that are contiguous in frequency. In one embodiment, for a serving cell, a set of carriers for different subcarrier spacings (SCS) can be configured. Then, how to determine the sub-band for each carrier of a serving cell needs to be defined. Options for configuration and determination of SBs may include one or more of:

In a first option for configuration and determination of SBs via cell specific higher layer signaling: For each carrier associated with a SCS, e.g., carriers according to SCS-SpecificCarrier, gNB configures the sub-band separately.

In one option, for a given frequency resource, UE does not expect to receive conflicting sub-band configuration information across different carriers.

In a second option for configuration and determination of SBs via cell specific higher layer signaling: gNB configures the sub-band for one reference carrier, and the sub-band information for other carriers are derived based on the reference carrier.

In one option, the reference carrier is the carrier with reference SCS. The reference SCS is determined according to one of the options as below:

As a first option, the reference SCS may be determined according to the smallest SCS among all SCSs for the serving cell.

As a second option, the reference SCS may be determined according to the largest SCS among all SCSs for the serving cell.
- As a third option, the reference SCS may be determined according to the reference SCS associated with the TDD UL-DL configuration for the serving cell

For both option 1 and option 2, gNB can configure the reference SCS which meets the rule for option 1 or option 2. Alternatively, a UE may derive the reference SCS according to the rule in either option 1 or option 2.

gNB configures the sub-band according to the bandwidth and SCS for the reference carrier. To derive the sub-band for non-reference carrier:

If a non-reference carrier has same bandwidth (same start and ending location in frequency domain) as reference carrier but different SCS, a set of PRBs in non-reference carrier overlaps with a sub-band i in reference carrier belong to sub-band i. For example, if sub-band i in reference carrier with SCS=15KHz consists of CRB # n ~ # (n+m), the sub-band i in a non-reference carrier with SCS=15^{∗}2^µ KHz consists of CRB # n/ µ ~# (n+m) / µ, where µ = {0, 1, 2, 3} corresponding to SCS of 15 kHz, 30 kHz, 60 kHz, and 120 kHz respectively.

On the other hand, to derive the sub-band for non-reference carrier: If a non-reference carrier has different bandwidth (different start or ending location in frequency domain) and different SCS, the sub-band for non-reference carrier is determined according to one of the options as below:

If the carrier bandwidth of a non-reference carrier is a sub-set of carrier bandwidth of reference carrier, a sub-band for non-reference carrier is derived by the intersection of PRBs of the non-reference and reference carrier for a sub-band in reference carrier. In other words, a set of PRBs in non-reference carrier fully confined within and overlaps with a sub-band i in reference carrier belong to sub-band i.

FIG. 3 shows an exemplary illustration of carriers with different SCSs using a reference. Carrier with SCS2 is reference carrier, carrier with SCS1 is non-reference carrier. gNB indicates DL/UL sub-band for carrier with SCS 2, and UE derives the DL/UL sub-band for carrier with SCS 1.

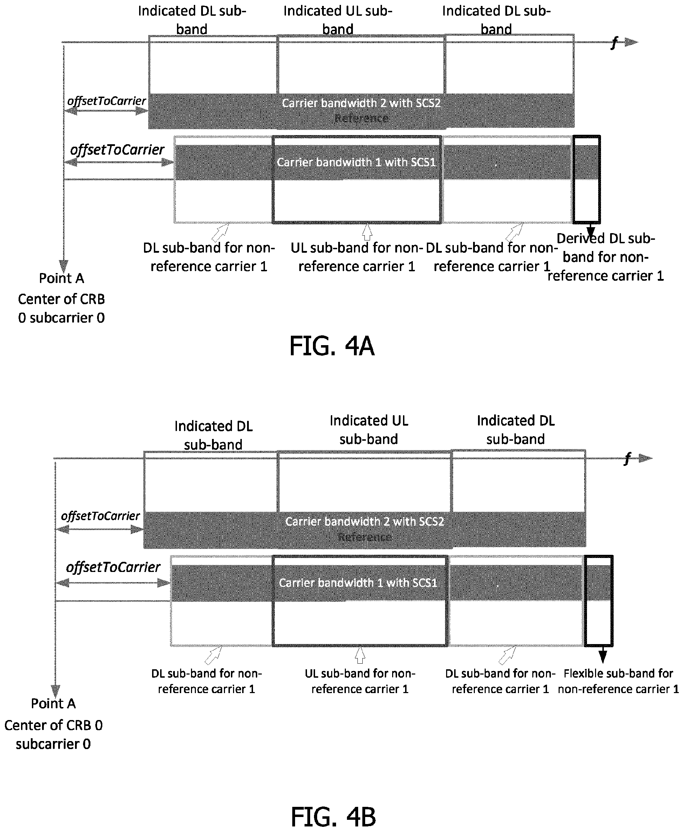

FIGs. 4A and 4B show exemplary illustrations for carriers with different SCSs respectively. If the carrier bandwidth of a non-reference carrier partially overlaps with carrier bandwidth of reference carrier, a sub-band for non-reference carrier is derived according to one of options as below:

As a first option: the same UL/DL/Flexible of the reference carrier bandwidth edge is assumed for the non-overlapped bandwidth for the non-reference carrier, e.g., DL sub-band is assumed in FIG. 4A (dark rectangle part).

As a second option: the non-overlapped bandwidth for the non-reference carrier is identified as flexible resources, e.g., as shown in FIG. 4B.

As a third option: the non-overlapped bandwidth for the non-reference carrier is identified UL/DL/Flexible according to UL/DL/Flexible symbols indicated by legacy UL-DL configuration.

For example, if a gNB indicates one legacy UL-DL configuration with UL/DL/Flexible symbol applicable to all carrier bandwidth and the gNB also indicates UL-DL configuration with sub-band information for reference carrier, UE determines the overlapped bandwidth as DL/UL/Flexible SB according to sub-band for reference carrier, and UE determines the non-overlapped bandwidth as DL/UL/Flexible SB for a symbol according to legacy UL/DL configuration.

In another option, the reference carrier is the carrier with largest bandwidth. The reference SCS is the SCS associated with the largest bandwidth. For example, the carrier with SCS2 has largest bandwidth, thus the carrier with SCS is the reference carrier and the reference SCS is SCS 2. The carrier bandwidth of a non-reference carrier is a sub-set of carrier bandwidth of reference carrier, a sub-band for non-reference carrier is derived by the intersection of PRBs of the non-reference and reference carrier for a sub-band in reference carrier. In other words, a set of PRBs in non-reference carrier fully confined within and overlaps with a sub-band i in reference carrier belong to sub-band i.

As a third option for configuration and determination of SBs: gNB configures the sub-band according to the union of all DL carriers or the union of all UL carriers or the union of all DL and UL carriers.

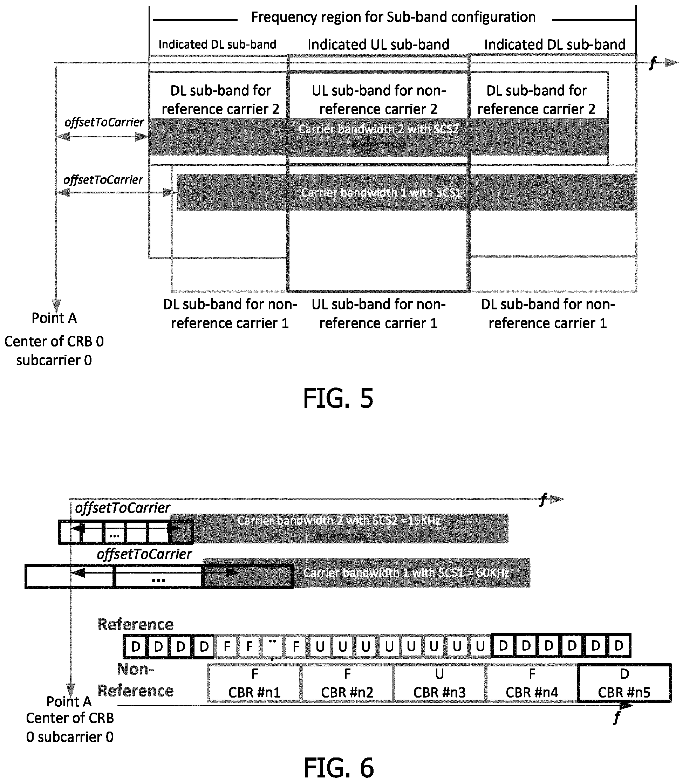

The frequency region for sub-band configuration is the union of all carrier bandwidth. gNB configures sub-band based within the frequency region, according to reference SCS. FIG. 5 provides an example.

As a fourth option for configuration and determination of SBs via cell specific higher layer signaling: gNB configures frequency region to indicate sub-band.

gNB configures frequency region to indicate sub-band, e.g., gNB indicates the start PRB and number of consecutive PRBs for the whole frequency region for all sub-bands, or gNB indicates the start PRB and number of consecutive PRBs for each sub-band. gNB configures reference SCS, or determines a reference SCS according to smallest SCS or largest SCS associated with the carrier, or the reference SCS is the SCS associated with initial BWP, or the reference SCS is the smallest SCS associated with DL and UL initial BWP, or the reference SCS is derived by reference SCS for TDD UL-DL configuration.

In one option, UE does not expect any carrier with bandwidth that is not confined within the configured bandwidth. In another option, the configured bandwidth can partially overlap with some of the bandwidth, then similar handling of the non-overlapped bandwidth in the second option for configuration and determination of SBs can be applied.

In one embodiment, for a carrier of a serving cell, different subcarrier spacings (SCS values) and different bandwidth can be configured for UL and DL carriers. Then, how to determine the sub-band for a pair of DL and UL carriers of a serving cell needs to be defined. Options for configuration and determination of SBs may include one or more of:

As a first alternative: Separate configuration for DL and UL, with one reference DL SCS and one reference UL SCS respectively.

As a second alternative: Single configuration for DL and UL, with one reference SCS for both DL and UL and one reference bandwidth.

The reference bandwidth can be the union of DL and UL bandwidth of reference SCS, or the one spans the larger bandwidth of DL and UL bandwidth of reference SCS, or the one spans the smaller bandwidth, or the union of DL and UL bandwidth of all SCS, or the largest bandwidth of all SCS of DL and UL, or the smallest bandwidth of all SCS of DL and UL. Similar handling of bandwidth non-overlapped with the reference bandwidth as in the second option for configuration and determination of SBs via cell specific higher layer signaling can be applied.

The reference SCS can be the smallest SCS for all DL/UL SCSs, or the SCS for the reference bandwidth.

The fourth option for configuration and determination of SBs via cell specific higher layer signaling can also apply.

In one embodiment, if a serving cell is configured with carriers with different SCSs, and DL and UL carrier are with different SCS and/or different bandwidth, one of the first, the second, the third, or the fourth option for configuration and determination of SBs via cell specific higher layer signaling can be combined with one of the first alternative or the second alternative to configure/determine DL/UL/Flexible sub-band for the serving cell. Alternatively, the third or the fourth option for configuration and determination of SBs via cell specific higher layer signaling can be directly applied to such case, for example, gNB configures the sub-band for one reference carrier among all DL/UL carriers of a serving cell, and the sub-band information for other carriers are derived by the reference carrier.

In one embodiment, if a serving cell is configured with carriers with different SCS, the sub-carrier boundary between different SCS is not aligned, and then, the PRB boundary between different SCS is not aligned. Because point A is the center of subcarrier 0 of CRB 0, the subcarrier boundary and PRB boundary between different SCS is non-aligned. E.g., PRB boundary has an offset of 22.5KHz between SCS=60 and SCS=15, PRB boundary has an offset of 7.5KHz between SCS=30 and SCS=15.

Due to non-aligned boundary, it is possible that a PRB with SCS i overlaps with two PRBs with SCS j. Then, if the two PRBs with SCS j for a reference carrier belongs to different DL/UL/Flexible resource, e.g., one PRB belongs to UL sub-band while the other PRB belongs to DL sub-band, DL/LTL/Flexible resource for the overlapped PRB with SCS i can be determined according to one of the options as below:

As a first option for SCS i determination: CRB index #n with SCS i follows the UL/DL/Flexible configuration for CRB index #n^{∗}2^(µi- µ0), where µ0 is for reference SCS, µi is for SCS i.

As a second option for SCS i determination: CRB index #n with SCS i follows the UL/DL/Flexible configuration of overlapped CRBs in reference carrier.

If one of the overlapping CRBs in reference cell is flexible, the CRB index #n is flexible resource.

If the overlapping CRBs in reference cell include both DL and UL resources, the CRB index #n with SCS i is flexible resource.

FIG. 6 provides an example. Reference carrier is carrier with SCS2=15KHz, and non-reference carrier is carrier with SCS1=60KHz. For non-reference carrier, because CRB #n1 overlaps with both a PRB of DL resource and a PRB of Flexible resource in reference carrier, the CRB #n1 is determined as flexible resource; CRB #n2 overlaps with both a PRB of UL resource and a PRB of Flexible resource in reference carrier, the CRB #n2 is determined as flexible resource; CRB #n3 only overlaps with PRBs of UL resource, the CRB #n3 is determined as UL resource; CRB #4 overlaps with both a PRB of DL resource and a PRB of UL resource in reference carrier, the CRB #n4 is determined as flexible resource; CRB #n5 only overlaps with PRBs of DL resource, the CRB #n5 is determined as DL resource.

### DL/UL resource configuration by UE specific higher layer signaling

For a serving cell with NOSB-FD operation, the sub-band (SB) configuration can be provided to the UE via UE specific higher layer signaling, e.g., dedicated RRC signaling.

In one embodiment, the sub-band is configured/determined per configured serving cell. Similar to cell-specific configuration, aspects provided for the first, the second, the third, or the fourth option for configuration and determination of SBs via cell specific higher layer signaling and respectively the first alternative and the second alternative can be applied.

In one option, the reference SCS for UE-specific configuration can be different from that for cell-specific configuration, because the UE may be configured with the sub-set of all SCSs of a cell. As one example, the reference SCS can be the same as that for the lowest indexed BWP configured in the serving cell. In another example, the reference SCS can be the same as that for the active DL/UL BWP configured for the serving cell. In another option, the reference SCS for UE-specific configuration is the reference SCS for cell-specific configuration.

In one embodiment, the sub-band is configured/determined per configured BWP. Options for the sub-band configuration/determination may include one or more of:

As a first option associated with SB configured/determined per BWP: Different BWP can be configured with different legacy UL-DL configuration.

For each BWP, a UL-DL configuration to indicate DL/LTL/Flexible symbol applied to the whole bandwidth of the BWP is configured. The reference SCS for the UL-DL configuration is the SCS associated with the BWP. If SCS for DL and UL BWP with same BWP index differ, the reference SCS is the smallest SCS, or the largest SCS for DL and UL BWP. Alternatively, the reference SCS is the reference SCS for cell-specific configuration.

As a second option associated with SB configured/determined per BWP: Different BWP can be configured with different DL/UL/Flexible sub-band configuration.

In a first alternative associated with the second option associated with SB configured/determined per BWP: Single configuration applied to both DL and UL BWP with same BWP index

In an example: If the BWs of the DL and UL BWPs with same BWP index differ, then the resolution of each BWP may be based on the selection of the BWP that spans the larger bandwidth of the two or one that spans the smaller bandwidth of the two. The SCS is determined by the selected DL or UL BWP.

In an example: If the SCS of the DL and UL BWPs with same BWP index differ, then the resolution of each BWP may be based on the selection of the BWP associated with smaller SCS, or the BWP associated with larger SCS. The bandwidth is determined by the selected DL or UL BWP.

In a second alternative associated with the second option associated with SB configured/determined per BWP: Separate configuration for DL and UL BWP with same BWP index respectively.

If a BWP is not configured with UE-specific UL-DL configuration, cell-specific UL-DL configuration is applied to the BWP.

### DL/UL resource configuration by dynamic signaling

For a serving cell with NOSB-FD operation, the sub-band (SB) configuration can be provided to the UE via dynamic Layer 1 signaling, e.g., using scheduling DCI formats or using dynamic slot format indication (SFI) via DCI 2_0.

In one embodiment, the sub-band is configured/determined per configured serving cell. Options for the sub-band configuration/determination may include one or more of:

A first option associated with dynamic signaling: gNB configures one or multiple SFI. Each SFI is configured with frequency region and SCS (or single SCS for the multiple SFIs), and each SFI indicates DL/UL or DL/UL/Flexible symbol for the frequency region.

Each SFI can be associated with different DCI.

Each SFI can be associated with different SS set.

Each SFI can be associated with different RNTI.

Multiple SFI can be associated with same DCI.

Each SFI is associated with separate bit field.

Multiple SFIs are associated with single bit field.

If a UE does not receive a SFI associated with a frequency region, the resources in the frequency region is identified as flexible resource or, identified as DL/LTL/Flexible resource according to RRC signaling for UL-DL configuration or, identified as DL/UL/Flexible resource according to legacy SFI indicating DL/UL/Flexible symbol, if received.

A second option associated with dynamic signaling: gNB configures one SFI.
gNB configures DL/UL or DL/LTL/Flexible SBs in the SFI.
gNB configures SCS for SFI.
gNB configures frequency region for the SFI for sub-band indication, or the sub-band is derived from reference bandwidth as Alt 1-2.

In one embodiment, the sub-band is configured/determined per configured BWP. Options for the sub-band configuration/determination may include one or more of:

gNB configures SFI for each BWP.

Each SFI can be associated with different DCI

SFIs for different BWPs can be associated with same DCI.

Each SFI is associated with separate bit field

Multiple SFIs are associated with single bit field

If a UE does not receive a SFI for a BWP, the resources in the BWP are identified as flexible resources or, identified as DL/UL/Flexible resources according to RRC signaling for UL-DL configuration or, identified as DL/LTL/Flexible resources according to legacy SFI, if received.

### Signaling details for sub-band configuration

For sub-band configuration by higher layer signaling or SFI, options for number of sub-band and sub-band frequency location within carrier bandwidth/BWP bandwidth/configured frequency region may include one or more of:

In some aspects: The number of SBs can be configured by gNB or determined by the bandwidth of a carrier or a BWP or determined by the configured frequency region.

In an example: The start PRB and bandwidth for SB can be derived by the bandwidth of a carrier or a BWP and the number of SBs.

For example, the bandwidth NBW = 100 PRBs with reference SCS. According to pre-defined relation between number of SBs and the bandwidth value, the number of SBs is determined as NSB. Then, each SB consists of ceil (NBW / NSB), or floor (NBW / NSB) PRBs with reference SCS. 1st PRB of 1st SB starts from the 1st PRB of the bandwidth.

In an example: The start PRB and bandwidth for a SB can be derived by the bandwidth of the configured frequency region and the number of SBs

For example, gNB configures NSB_tot_PRB=100 PRB as the frequency region for SB. According to pre-defined relation between number of SBs and the bandwidth value, the number of SBs is determined as NSB. Then, each SB consists of ceil (NSB_tot_PRB/ NSB), or floor (NSB_tot_PRB/ NSB) PRBs with reference SCS. 1st PRB of 1st SB starts from the 1st PRB of the configured frequency region.

In some aspects: The start PRB, bandwidth and the number of SBs are all explicitly configured by gNB.

In an example: gNB configures a frequency region and the number of SBs. All SBs are confined within the frequency region.

For example, gNB configures NSB_tot_PRB=100 PRB as the frequency region for SB, from CRB #n -CRB #n+99 with reference SCS, and gNB configures the number of SBs NSB=3. Then, each SB consists of ceil (NSB_tot_PRB/ NSB), or floor (NSB_tot_PRB/ NSB) PRBs with reference SCS.

In an example: gNB configures frequency region for each SB.

For example, gNB configures CRB #n1 ~ CRB #n2 with reference SCS for SB1, and CRB #n3 ~ CRB #n4 with reference SCS for SB2, and CRB #n5 ~ CRB #n6 with reference SCS for SB3. So, the number of SBs NSB=3.

The frequency granularity for SB configuration can be based on resource block group, and the number of RBs within an RB group is pre-defined or configured, which is similar to RB group for resource allocation type 0. Alternatively, the frequency granularity for SB configuration can be based on the multiple of PRBs occupying approximately to a pre-defined or configured bandwidth, e.g., 20MHz, which is similar to RB set in NRU.

For NOSB-FD operation, different sub-bands are non-overlapped. For SB-FD operation, different sub-bands can be partially or fully overlapped.

For a sub-band, within a symbol duration, either DL or UL or flexible resource can be indicated. Alternatively, either DL or UL resource can be indicated. Alternatively, only UL resource can be indicated. In one option, if the attribute can only be UL, explicit indication of the attribute information can be skipped with the assumption that a sub-band is for UL if the frequency resource information is provided for this sub-band.

In one embodiment, the sub-band information in frequency domain as discussed above and the symbol information (DL/UL/Flexible symbol) in time domain can be configured separately by RRC signaling or indicated by SFI. UE can identify DL/UL/Flexible resource according to both information.

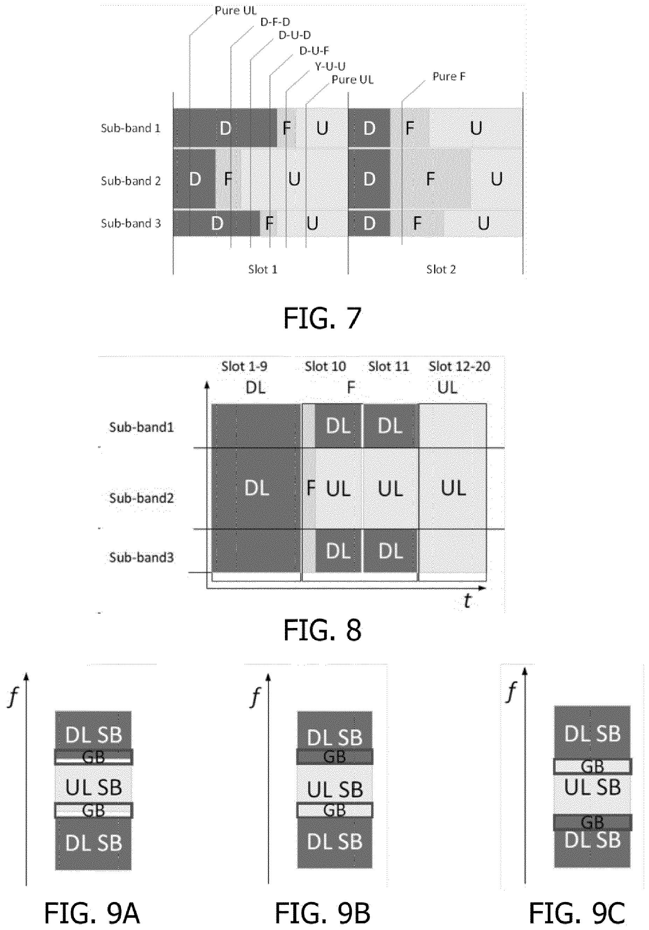

FIG. 7 shows an exemplary illustration of a resource configuration. For example, gNB configures the frequency resources for each sub-band, and for each sub-band, gNB configures symbol information (DL/UL/Flexible symbol) in time domain for each sub-band respectively via one or more of: cell-specific higher-layer TDD DL-UL configuration, cell-specific higher-layer TDD DL-UL configuration, and dynamic Layer 1 signaling via scheduling DCI formats or DCI format 2_0. As shown in FIG. 7, gNB configures DL/LTL/Flexible symbols for each sub-band by legacy symbol information in time domain. For a bandwidth, within one symbol, DL/LTL/Flexible resource can be in different sub-bands. UE identifies NOSB-FD symbols accordingly. It can be seen that the sub-band combination for each NOSB-FD symbol can be different, e.g., some NOSB-FD symbol consists of DL - Flexible - DL resources, some NOSB-FD symbol consists of DL - UL - DL resources, etc.

In one embodiment, gNB configures the time domain location for NOSB-FD symbol, e.g., a set of slot configurations, and for each slot configuration from the set of slot configurations, a slot index and a set of symbols for a slot is provided to indicate slot and symbol location for a NOSB-FD symbol. gNB also configures sub-band information for the NOSB-FD symbols, i.e., the frequency resources for each sub-band and the sub-band attributes, i.e., DL /UL, or DL/UL/Flexible, or UL/Flexible, or UL.

FIG. 8 shows an exemplary illustration of a resource configuration.

In one option, gNB configures time domain location for NOSB-FD symbol and legacy DL/UL/Flexible symbol by separate signaling. NOSB-FD symbols may be indicated to a UE via one or more of: cell-specific and UE-specific higher layer signaling such that symbols indicated as DL or flexible via either of cell-specific or UE-specific TDD DL-UL configuration can be further indicated as NOSB-FD symbols. Thus, in an example, a UE may be provided with higher layer configurations for tdd-UL-DL-ConfigurationCommon and tdd-UL-DL-ConfigurationDedicated and further, with a UE-specific configuration subband-FullDuplexSymbolsConfigurationDedicated to identify the NOSB-FD symbols from the number of DL and/or flexible symbols in a slot determined based on reception of tdd-UL-DL-ConfigurationCommon and tdd-UL-DL-ConfigurationDedicated. For instance, a parameter nrofSubbandFullDuplexSymbols may indicate a number of last NOSB-FD symbols from the number of DL or flexible symbols indicated by one or combination of tdd-UL-DL-ConfigurationCommon and tdd-UL-DL-ConfigurationDedicated. FIG. 8 provides an example. One signaling configures DL/UL/Flexible symbols by legacy tdd-UL-DL-ConfigurationCommon signaling, indicating slots #1 through #9 as DL slot, slots #10 and #11 as Flexible slots, and slots #12 through #20 as UL slots. One signaling configures slot and symbol location for NOSB-FD symbol, indicating symbol #5~#13 in slot 10, and whole slot 11 for NOSB-FD symbol. And the signaling provides sub-band frequency resource and attributes for each sub-band, i.e., sub-band 1 is DL, sub-band 2 is UL, sub-band 3 is DL for each NOSB-FD symbol. For the example in Figure 7, the sub-band combination for each NOSB-FD symbol is the same.

In another option, gNB configures time domain location for NOSB-FD symbol and non-NOSB-FD symbol by one signaling, e.g., gNB configures the time location and symbol attribute of DL/LTL/Flexible symbol/NOSB-FD symbol by a single signaling. For example, a UE may be configured with UE-specific configuration subband-FullDuplexSymbolsConfigurationDedicated to replace tdd-UL-DL-ConfigurationDedicated. In such a case, the signaling structure for subband-FullDuplexSymbolsConfigurationDedicated may be defined by expanding the structure of tdd-UL-DL-ConfigurationDedicated by including indication of NOSB-FD symbols in addition to DL/flexible/UL symbols in a slot via a parameter like nrofSubbandFullDuplexSymbols described above.

For the above embodiments, the configuration for time domain information (denoted as time domain slot format combination in the following) and configuration for sub-band information (denoted as frequency domain sub-band combination) can be jointly or separately configured. The signaling can be higher-layer signaling, e.g., RRC signaling, and/or dynamic signaling, e.g., SFI. For example, gNB indicates time and sub-band combination by one SFI -index field in DCI format 2_0. Comparing with legacy slotFormatCombinations, both locations of legacy DL/UL/Flexible symbols and symbol location for NOSB-FD symbol with sub-band information are configured. In another example, gNB indicates time and sub-band combination by RRC signaling, and gNB indicates time domain information for NOSB-FD symbol and non-NOSB-FD symbol by dynamic signaling. If the dynamic signaling is SFI, gNB can use existing SFI-index value, e.g., 0~55, to indicate non-NOSB-FD symbols (full DL/LTL/Flexible symbol) as legacy TDD system, and use reserved SFI-index value, e.g., 56~255, to indicate NOSB-FD symbol and non-NOSB-FD symbols or only NOSB-FD symbols within a periodicity.

In one option, a duration of time domain slot format combination is configured, and the duration is also applied to frequency domain sub-band combination, or gNB should configure the same duration for frequency domain sub-band combination. In another option, a duration of time domain slot format combination and a duration of frequency domain sub-band combination can be configured separately.

In one option, PDCCH monitoring periodicity for frequency domain sub-band combination is no larger than the duration of frequency domain sub-band combination. In another option, PDCCH monitoring periodicity for frequency domain sub-band combination can be larger than the duration of frequency domain sub-band combination. The slots without sub-band information are determined as non-NOSB-FD, i.e., DL/LTL/Flexible symbol for the slots are determined by time domain slot format combination

In one option, UE may receive more than one DCIs for frequency domain sub-band information for a same slot, and in such a case, the UE may expect the sub-band information carried by the DCIs are the same. In another option, UE may use the last received DCI (that is the DCI format carried by the PDCCH with a later-ending symbol) to determine the sub-band information for the slot. In a further example of this option, in case more than one DCI formats indicate sub-band configuration information for a slot, a second DCI format that ends later in time compared to a first DCI format may override information (DL/UL/flexible) for a sub-band if the sub-band is indicated as flexible sub-band by the first DCI format.

In one option, UE does not expect the frequency domain sub-band combination changes within a duration of time domain slot format combination. For example, a duration of time domain slot format combination is 10ms, the PDCCH monitoring periodicity for frequency domain SFI is 2ms, the UE may detect more than one DCI formats 2_0 indicating sub-band information for a slot, and the UE expects each of the more than one DCI formats 2_0 to indicate a same sub-band information for a slot. In another option, UE may expect the frequency domain sub-band combination changes within a duration of time domain slot format combination. The sub-band information for different slots can be different, while the sub-band information for a given slot should be the same if received via multiple indications.

In one option, for a NOSB-FD symbol, a UE may assume that the received sub-band configuration does not change until a subsequent indication is received. In an example of the embodiment, the indication may be received via one or more of: cell-specific higher layer signaling, UE-specific higher layer signaling, and dynamic Layer 1 signaling. In another example, the sub-band indication is via dynamic Layer 1 signaling, and the sub-band configuration indication is assumed to be valid for a specified or higher layer-configured period of time, that may be defined in terms of absolute time, a number of radio frames, a number of sub-frames, a number of slots of the numerology (SCS) used for the sub-band configuration.

In one option, UE expects at most one switch between NOSB-FD and non NOSB-FD symbols in a slot. For example, in a slot, it is allowed that first consecutive symbols are symbols with NOSB-FD and the remaining consecutive symbols are either DL symbols, or UL symbols or flexible symbols. For another example, in a slot, it is allowed that first consecutive symbols are either DL symbols, or UL symbols or flexible symbols and the remaining consecutive symbols are symbols with NOSB-FD. In one option, UE expects at most one switch between NOSB-FD with different DL/LTL/Flexible sub-band configuration. For example, in a slot, it is allowed that first consecutive symbols are symbols with UL sub-band in PRB # n1~ #n2, and the remaining consecutive symbols are symbols with NOSB-FD with UL sub-band in PRB # n3~ #n4. In a further example of the embodiment, a switching gap may be defined at the boundary of a switch between a NOSB-FD symbol and a regular symbol during which a UE is not expected to transmit or receive anything.

### Identification of DL/UL resource

In one embodiment, based on sub-band configuration, a UE can identify DL or UL resource according to one or more of options as below:

In one example: a sub-band can be identified as DL resource, if the sub-band is indicated as DL sub-band. A sub-band can be identified as UL sub-band, if the sub-band is indicated as UL sub-band.

In one example: a sub-band can be identified as DL resource, if the sub-band is in a DL symbol and the sub-band is not configured as a DL, UL or Flexible SB.

In one example: a sub-band can be identified as UL resource, if the sub-band is in a UL symbol and the sub-band is not configured with DL, UL or Flexible SB. Alternatively, a sub-band can be identified as UL resource if the sub-band is in a UL symbol, regardless of whether the sub-band is configured as DL/LTL/flexible SB.

In one embodiment, based on sub-band configuration, a UE can identify flexible resource according to one or more of options as below:
In an example: a sub-band can be identified as Flexible resource, if the sub-band is indicated as Flexible sub-band.
In an example: a sub-band can be identified as Flexible resource, if the sub-band is not configured as DL or UL SB.
In an example: a sub-band can be identified as Flexible resource, if the sub-band is in a Flexible symbol and the sub-band is not configured as DL or UL SB.
In an example: flexible resource may be determined as numbers of consecutive PRBs in a DL/UL BWP or a carrier bandwidth that are not identified as either DL or UL SBs.
In an example: flexible resource may be determined as numbers of consecutive PRBs in a DL/UL BWP or a carrier bandwidth that are not identified as either DL or UL SBs in a Flexible symbol.
In an example: flexible resource may be determined as numbers of consecutive PRBs in a DL/UL BWP or a carrier bandwidth that are not identified as UL SBs, if a UE may be configured with sub-bands that may be identified only as UL SBs.
In an example: flexible resource may be determined as numbers of consecutive PRBs in a DL/UL BWP or a carrier bandwidth that are not identified as UL SBs in a Flexible symbol, if a UE may be configured with sub-bands that may be identified only as UL SBs.
In an example: a sub-band can be identified as Flexible resource, if the sub-band is in a symbol that is not indicated as a DL or UL symbol via higher-layer signaling and the sub-band is not configured as DL or UL SB.

To reduce the impact of cross-link interference between DL and UL transmission in different sub-band in a NOSB-FD symbol, a guard band between DL and UL frequency resources in the NOSB-FD symbol may be beneficial.

In one embodiment, the guard band is implicitly derived by consecutive PRBs between two adjacent sub-bands. In one option, one of the two sub-band is identified as DL sub-band and the other of the two sub-band is identified as UL sub-band. In another option, one of the two sub-band is identified as UL sub-band and the other of the two sub-band is identified as Flexible sub-band. In another option, one of the two sub-band is identified as DL sub-band and the other of the two sub-band is identified as Flexible sub-band. In another option, both two sub-bands are identified as flexible sub-bands.

For example, gNB configures CRB #11 - CRB #60 with reference SCS for SB1 as DL SB, and CRB #65 ~ CRB #160 with reference SCS for SB2 as UL SB, and CRB #165 ~ CRB #210 with reference SCS for SB3 as DL SB. Then, guard band is CRB #61 - CRB #64, CRB #161 - CRB #164.

In another embodiment, the guard band is implicitly derived by identified flexible sub-band.

In another embodiment, if two adjacent sub-bands are both used for the reception, or both used for transmission, the guard band between the two sub-bands is used for the reception or for the transmission accordingly. For example, for symbol n, gNB semi-statically configures CRB #11 ~ CRB #60 with reference SCS for SB1 as DL SB, and CRB #65 ~ CRB #160 with reference SCS for SB2 as UL SB, and CRB #165 ~ CRB #210 with reference SCS for SB3 as DL SB. gNB schedules a PDSCH in CRB #1~CRB#100 in the symbol n. Then, guard band CRB #61 - CRB #64 is also used for PDSCH. For another example, for symbol n, CRB #11 - CRB #60 with reference SCS for SB1 is flexible SB, CRB #65 ~ CRB #160 with reference SCS for SB2 is UL SB. gNB schedules a PUSCH in CRB #1~CRB#100 in the symbol n. Then, guard band CRB #61 - CRB #64 is also used for PUSCH.

In another embodiment, the guard band is explicitly configured by gNB. gNB configures the start PRB and number of consecutive PRBs for the guard band, according to a reference SCS. In one option, the guard band can overlap with identified DL/LTL/Flexible sub-band. In another option, the guard band cannot overlap with identified DL/UL/Flexible sub-band, in other words, the sub-band configuration should avoid the PRBs for guard band.

FIGs. 9A, 9B, and 9C show exemplary illustrations for different guard band associated configurations. In another embodiment, the number of PRBs for guard band is explicitly configured by gNB, or determined according to a pre-defined value, while the location of guard band is implicitly derived by DL/UL/Flexible sub-band. In one option, the start PRB for guard band is the next PRB to the end of sub-band Xi, as shown in FIG. 9A. In another option, the start PRB for guard band is first PRB of sub-band Xi+1, as shown in FIG. 9B. In another option, the last PRB for guard band is the last PRB of sub-band Xi, as shown in FIG. 9C. The guard band applies between two adjacent sub-band, for one or more of the cases as below: (i) one of the two sub-band is identified as DL sub-band and the other of the two sub-band is identified as UL sub-band; (ii) one of the two sub-band is identified as UL sub-band and the other of the two sub-band is identified as Flexible sub-band; (iii) one of the two sub-band is identified as DL sub-band and the other of the two sub-band is identified as Flexible sub-band; (iv) both two sub-bands are identified as flexible sub-bands.

In one embodiment, UE does not receive or transmit in the guard band. In one option, UE does not receive or transmit specific DL/UL signals or channels in the guard band. The specific DL/UL signals or channels include one or more of:
i) any DL/UL signals or channels;
ii) any DL/UL signals configured by higher layer;
iii) any cell-specific DL/UL signals configured by higher layer;
iv) any UE-specific DL/UL signals configured by higher layer;
v) any UL signal, if the guard band is between two sub-band and SS/PBCH is in one of the sub-bands;
vi) any UL signal configured by higher layer, if the guard band is between two sub-band and SS/PBCH is in one of the sub-bands;
vii) any UL signal, if the guard band is between two sub-band and TypeO-PDCCH CSS set is in one of the sub-bands;
viii) any UL signal configured by higher layer, if the guard band is between two sub-band and TypeO-PDCCH CSS set is in one of the sub-bands;
xi) any DL signal, if the guard band is between two sub-band and valid RO/PO is in one of the sub-bands;
x) any DL signal configured by higher layer, if the guard band is between two sub-band and valid RO/PO is in one of the sub-bands;
xi) any DL signal other than SS/PBCH, if the guard band is between two sub-band and valid RO/PO is in one of the sub-bands;
xii) any DL signal configured by higher layer other than SS/PBCH, if the guard band is between two sub-band and valid RO/PO is in one of the sub-bands;
xiii) any DL signal other than TypeO-PDCCH CSS set, if the guard band is between two sub-band and valid RO/PO is in one of the sub-bands;
xiv) any DL signal configured by higher layer other than TypeO-PDCCH CSS set, if the guard band is between two sub-band and valid RO/PO is in one of the sub-bands.

UE does not receive or transmit specific DL/UL signals or channels in the guard band, by rate matching, or puncture, or completely drop the specific DL/UL signals, or by proper gNB scheduling/configuration to avoid specific DL/UL signals or channels in the guard band.

### Relation between signaling for DL/UL resource configuration

In one embodiment, the relation between legacy cell-specific UL-DL configuration for DL/LTL/Flexible symbols and cell-specific UL-DL configuration for sub-band by higher layer signaling can be determined according to one or more of:
In an example: DL/UL SB can be configured only in legacy Flexible symbols

Restriction of NOSB-FD symbol in legacy Flexible symbol can avoid impact of full duplex to legacy UE in legacy DL/UL symbols.

In an example: DL/UL SB can be configured in legacy Flexible & DL symbols

Allowing UL SB also in DL symbols can provide NOSB-FD operation for advanced UEs even if gNB configures only very few Flexible symbols for legacy UE.

In an example: DL/UL SB can be configured in legacy Flexible & DL &UL symbols

This option may provide most flexible configuration.

In one embodiment, the relation between cell-specific and UE-specific UL-DL configuration by higher layer signaling can be determined according to one or more of:
If cell-specific configuration is legacy UL-DL configuration for DL/LTL/Flexible symbols:

One example may include: UE-specific DL/UL SB can be configured only in legacy Flexible symbols (similar to legacy rule, no confliction between cell-specific and UE-specific configuration)

One example may include: UE-specific DL/UL SB can be configured in legacy Flexible & DL symbols (to provide UL SB in legacy DL symbol)

One example may include: UE-specific DL/UL SB can be configured in legacy Flexible & DL &UL symbols (full flexibility)

If cell-specific configuration configures sub-band:
One example may include: UE-specific DL/UL SB can be configured only in cell-specific Flexible symbols or Flexible SB
One example may include: UE-specific DL/UL SB can be configured only in cell-specific Flexible & DL symbols or Flexible SB
One example may include: UE-specific DL/UL SB can be configured only in symbols without cell-specifically configured subband (i.e., cell-specific non-NOSB-FD symbol) or in symbols with Flexible SB
One example may include: UE-specific UL-DL configuration for DL/LTL/Flexible symbols can be configured only in cell-specific Flexible symbols or Flexible SB
One example may include: UE-specific UL-DL configuration for DL/LTL/Flexible symbols can be configured in symbols with cell-specifically configured subband (i.e., cell-specific NOSB-FD symbol).

For above options, gNB may configure a set of symbols which can be configured by UE-specific UL-DL configuration. For example, for cell-specific non-NOSB-FD symbols (e.g., cell-specific DL symbols and flexible symbols), gNB may configure a subset of the non-NOSB-FD symbols which can be configured with UE-specific DL/UL SB. In another example, for cell-specific NOSB-FD symbols, gNB may configure a subset of the cell-specific NOSB-FD symbol which can be configured with UE-specific DL/UL SB or can be configured with UE-specific UL-DL configuration for DL/LTL/Flexible symbols. Alternatively, the set of symbols which can be configured by UE-specific UL-DL configuration can be derived according to pre-defined rule.

In one embodiment, the relation between UL-DL configuration by higher layer signaling and SFI can be determined according to one or more of:

If RRC configuration is legacy UL-DL configuration for DL/UL/Flexible symbol, and SFI indicates DL/UL/Flexible sub-band (including one SFI with SB configuration or multiple SFIs with DL/UL/Flexible symbol for each carrier or BWP or sub-band)

One example may include: DL/UL/Flexible SB by SFI can be configured only in semi-static Flexible symbols.

One example may include: DL/UL/Flex SB by SFI can be configured in semi-static Flexible & DL symbols.

One example may include: DL/UL/Flexible SB by SFI can be configured in semi-static Flexible & DL &UL symbols.

If both RRC configuration and SFI indicates sub-band information (including one SFI with SB configuration or multiple SFIs with DL/UL/Flexible symbol for each carrier or BWP or sub-band)

One example may include: DL/UL/Flexible SB by SFI can be configured only in semi-static Flexible symbols or Flexible SB.

If RRC configuration indicates sub-band information, and SFI indicates DL/UL/Flexible symbol applied to all BWPs

One example may include: DL/LTL/Flexible symbols by SFI can be configured in semi-static Flexible symbol or a symbol containing at least two of DL/UL/Flexible SBs (semi-static NOSB-FD symbol), e.g., a symbol contains both DL and UL SB, or a symbol contains both UL and Flexible SB. UE identifies these symbols as DL-only or UL-only according to SFI.

If RRC configuration indicates sub-band information, and SFI indicates non-NOSB-FD symbol and/or NOSB-FD symbol

One example may include: non-NOSB-FD symbol (DL/UL/Flexible symbols) by SFI can be configured in semi-static Flexible symbol or a symbol containing at least two of DL/UL/Flexible SBs (semi-static NOSB-FD symbol), e.g., a symbol contains both DL and UL SB, or a symbol contains both UL and Flexible SB. UE identifies these symbols as DL-only or UL-only according to SFI. NOSB-FD symbol by SFI can be configured in semi-static Flexible symbol or semi-static Flexible/DL symbol or semi-static Flexible/DL/UL symbol. UE determines frequency domain sub-band information for the NOSB-FD symbol by the sub-band information provided by the RRC configuration.

For a slot, a UE may not receive DL/UL/Flexible sub-band information for the slot, i.e., no frequency domain sub-band combination for the slot. In one option, UE assumes the symbols in the slot is non-NOSB-FD symbol, UE determines DL/UL/Flexible symbols according to time domain slot format combination. In another option, UE assumes the symbols in the slot may be NOSB-FD symbol with flexible sub-band.

For above options, gNB may configure a set of symbols which can be configured by SFI. For example, for higher layer configured DL symbols and flexible symbols, gNB may configure a subset of the DL /flexible symbols which can be configured with DL/UL SB (NOSB-FD symbol) by SFI. In another example, for symbols with higher layer configured subband (semi-static NOSB-FD symbol), gNB may configure a sub-set of the semi-static NOSB-FD symbol which can be configured as non-NOSB-FD symbol (DL/UL/Flexible symbols) by SFI. Alternatively, the set of symbols which can be configured by SFI can be derived according to pre-defined rule.

One or more of following approaches can be used for higher layer-configured channel/signal reception/transmission by UE, if UE is configured to monitor for dynamic SFI (DCI format 2_0), depending on whether (i) a subset of higher layer-configured DL/flexible symbols may be indicated as NOSB-FD symbols by dynamic SFI, or (ii) a subset of higher layer-configured NOSB-FD symbols may be indicated as non-NOSB-FD symbols by dynamic SFI:

By one approach, for symbols within the subset, a higher layer-configured channel/signal overlapping with at least one symbol within the subset may be fully or partially cancelled, if UE does not detect a valid SFI.

By one approach, for symbols within the subset, a higher layer-configured UL channel/signal overlapping with at least one symbol within the subset may be fully or partially cancelled, if UE does not detect a valid SFI.

By another approach, for symbols within the subset, a higher layer-configured channel/signal overlapping with at least one symbol within the subset may be received or transmitted or cancelled based on the symbol and subband configured by the RRC configuration, if UE does not detect a valid SFI.

By another approach, for symbols within the subset, if the symbol is a DL symbol with subband by RRC configuration (semi-static NOSB-FD symbol), a higher layer-configured UL channel/signal in UL subband of at least one symbol within the subset may be fully or partially cancelled, if UE does not detect a valid SFI.

By another approach, for symbols within the subset, if the symbol is a DL symbol with subband by RRC configuration (semi-static NOSB-FD symbol), a higher layer-configured UL channel/signal in UL subband or guard band of at least one symbol within the subset may be fully or partially cancelled, if UE does not detect a valid SFI.

By another approach, for symbols within the subset, if the symbol is a DL symbol without subband by RRC configuration (semi-static non-NOSB-FD symbol), a higher layer-configured DL channel/signal overlapping UL subband of at least one symbol within the subset may be fully or partially cancelled, if UE does not detect a valid SFI.

By another approach, for symbols within the subset, if the symbol is a DL symbol without subband by RRC configuration (semi-static non-NOSB-FD symbol), a higher layer-configured DL channel/signal overlapping UL subband or guard band of at least one symbol within the subset may be fully or partially cancelled, if UE does not detect a valid SFI.

By another approach, for symbols within the subset, if the symbol is a flexible symbol with subband by RRC configuration (semi-static NOSB-FD symbol), a higher layer-configured channel/signal overlapping with at least one symbol within the subset may be fully or partially cancelled, if UE does not detect a valid SFI.

By another approach, for symbols within the subset, if the symbol is a flexible symbol with subband by RRC configuration (semi-static NOSB-FD symbol), a higher layer-configured UL channel/signal in UL subband of at least one symbol within the subset may be fully or partially cancelled, if UE does not detect a valid SFI

By another approach, for symbols within the subset, if the symbol is a flexible symbol with subband by RRC configuration (semi-static NOSB-FD symbol), a higher layer-configured UL channel/signal in UL subband or guard band of at least one symbol within the subset may be fully or partially cancelled, if UE does not detect a valid SFI

By another approach, for symbols within the subset, if the symbol is a flexible symbol without subband by RRC configuration (semi-static non-NOSB-FD symbol), a higher layer-configured channel/signal overlapping with at least one symbol within the subset may be fully or partially cancelled, if UE does not detect a valid SFI.

In one embodiment, the relation between UL-DL configuration and dynamic scheduling can be determined according to one or more of:

A UE does not expect to receive a dynamic scheduling for UL transmission overlapping with a DL SB.

A UE does not expect to receive a dynamic scheduling for DL reception overlapping with a UL SB.

A UE may expect to receive a dynamic scheduling for DL reception overlapping with a UL SB. gNB may configure a set of symbols in which the UE may expect to receive a dynamic scheduling for DL reception overlapping with a UL SB. For example, for higher layer configured DL symbols and flexible symbols, gNB may configure a subset of the DL /flexible symbols in which the UE may expect to receive a dynamic scheduling for DL reception overlapping with a UL SB.

A UE may expect to receive a dynamic scheduling for UL transmission overlapping with a DL SB. For example, if the UL transmission is in a flexible symbol with subband configured by RRC signaling, the UE may expect to receive the dynamic scheduling for the UL transmission overlapping with a DL SB. gNB may configure a set of symbols in which the UE may expect to receive a dynamic scheduling for UL transmission overlapping with a DL SB. For example, for higher layer configured flexible symbols, gNB may configure a subset of the flexible symbols in which the UE may expect to receive a dynamic scheduling for UL transmission overlapping with a DL SB.

If a UE is not provided with UL-DL configuration for sub-band, the UE can expect to receive a dynamic scheduling for UL transmission overlapping with a DL symbol indicated by the cell-specific UL-DL configuration.

If a UE is provided with legacy cell-specific UL-DL configuration for DL/UL/Flexible symbol, the UE can expect to receive a dynamic scheduling for UL transmission overlapping with a DL symbol indicated by the cell-specific UL-DL configuration.

In one embodiment, the relation between DL/UL SB and DL/UL carrier bandwidth, if DL/UL SB is configured per carrier.

Different combinations of constraints on the configuration of DL/UL/Flexible SBs may be considered; these may include:
a DL or UL SB, when configured, may not span frequency resources beyond those that are common to the DL and UL bandwidth.
a DL or UL SB, when configured, may not span frequency resources beyond the DL or UL bandwidth (respectively).
a DL SB, when configured, may not span frequency resources beyond the DL bandwidth while an UL SB may span frequency resources beyond the UL bandwidth.
an UL SB, when configured, may not span frequency resources beyond the UL bandwidth while a DL SB may span frequency resources beyond the DL bandwidth.
a DL or UL SB, when configured, may span frequency resources beyond the DL bandwidth while an UL SB may span frequency resources beyond the UL bandwidth.

The DL/UL bandwidth is DL or UL bandwidth of reference SCS or, the DL/UL bandwidth is all DL/UL bandwidths associated with a carrier or, the DL/UL bandwidth is the union of all DL/UL bandwidths (respectively) associated with a carrier.

In one embodiment, the relation between DL/UL SB and DL/UL BWP, if DL/UL SB is configured per BWP.

Different combinations of constraints on the configuration of DL/UL/Flexible SBs may be considered; these may include:
a DL or UL SB, when configured, may not span frequency resources beyond those that are common to the DL and UL BWPs;
a DL or UL SB, when configured, may not span frequency resources beyond the DL or UL BWP (respectively);
a DL SB, when configured, may not span frequency resources beyond the DL BWP while an UL SB may span frequency resources beyond the UL BWP;
an UL SB, when configured, may not span frequency resources beyond the UL BWP while a DL SB may span frequency resources beyond the DL BWP;
a DL or UL SB, when configured, may span frequency resources beyond the DL BWP while an UL SB may span frequency resources beyond the UL BWP.

In the above, for the options that may allow for a DL/UL SB to span resources beyond DL/UL BWPs, a UE may expect that a semi-static or dynamic resource assignment or grant for DL reception or UL reception (respectively) to be limited to resources in a DL/UL SB that are within the DL/UL BWP (respectively).

In one embodiment, in a slot, a UE does not expect some symbols are configured as NOSB-FD symbols while other symbols configured as non-NOSB-FD symbol.

In one embodiment, for a set of symbols of a slot indicated to a UE by ssb-PositionsInBurst in SIB 1 or ssb-PositionsInBurst in ServingCellConfigCommon, the UE does not expect the set of symbols of the slot to be indicated with NOSB-FD.

In one embodiment, for a set of symbols of a slot indicated to a UE by ssb-PositionsInBurst in SIB 1 or ssb-PositionsInBurst in ServingCellConfigCommon, the UE does not expect the SS/PBCH overlaps with the UL SB in the set of symbols of the slot.

In one embodiment, for a set of symbols of a slot indicated to a UE by pdcch-ConfigSIB1 in MIB for a CORESET for TypeO-PDCCH CSS set, the UE does not expect the set of symbols of the slot to be indicated with NOSB-FD.

In one embodiment, for a set of symbols of a slot indicated to a UE by pdcch-ConfigSIB1 in MIB for a CORESET for TypeO-PDCCH CSS set, the UE does not expect the TypeO-PDCCH CSS set overlaps with the UL SB in the set of symbols of the slot.

In one embodiment, for a set of symbols of a slot containing PRACH occasion or MsgA PUSCH occasion configured by SIB1 for RACH procedure or Small data transmission, the UE does not expect the set of symbols of the slot to be indicated with NOSB-FD.

### SYSTEMS AND IMPLEMENTATIONS

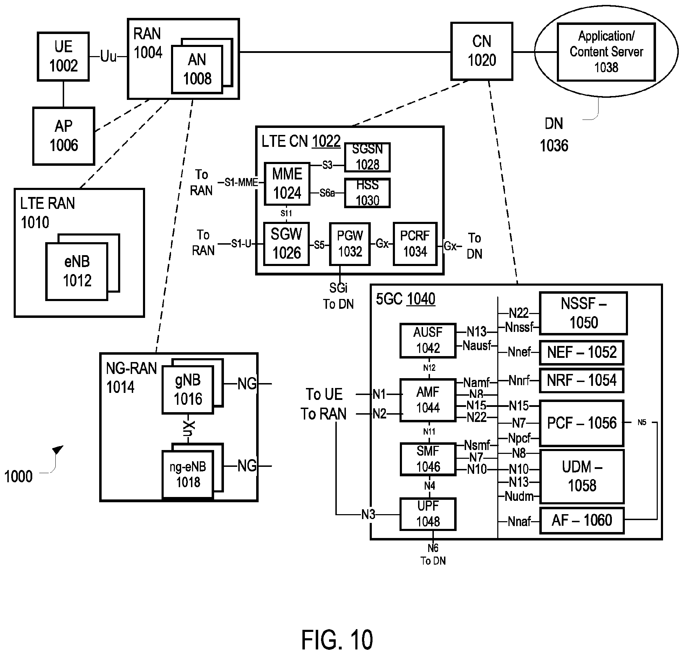

FIGs. 10-13 illustrate various systems, devices, and components that may implement aspects of disclosed embodiments.

FIG. 10 illustrates a network 1000 in accordance with various embodiments. The network 1000 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 1000 may include a UE 1002, which may include any mobile or non-mobile computing device designed to communicate with a RAN 1004 via an over-the-air connection. The UE 1002 may be communicatively coupled with the RAN 1004 by a Uu interface. The UE 1002 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 1000 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 1002 may additionally communicate with an AP 1006 via an over-the-air connection. The AP 1006 may manage a WLAN connection, which may serve to offload some/all network traffic from the RAN 1004. The connection between the UE 1002 and the AP 1006 may be consistent with any IEEE 802.11 protocol, wherein the AP 1006 could be a wireless fidelity (Wi-Fi^{®}) router. In some embodiments, the UE 1002, RAN 1004, and AP 1006 may utilize cellular-WLAN aggregation (for example, LWA/LWIP). Cellular-WLAN aggregation may involve the UE 1002 being configured by the RAN 1004 to utilize both cellular radio resources and WLAN resources.

The RAN 1004 may include one or more access nodes, for example, AN 1008. AN 1008 may terminate air-interface protocols for the UE 1002 by providing access stratum protocols including RRC, PDCP, RLC, MAC, and L1 protocols. In this manner, the AN 1008 may enable data/voice connectivity between CN 1020 and the UE 1002. In some embodiments, the AN 1008 may be implemented in a discrete device or as one or more software entities running on server computers as part of, for example, a virtual network, which may be referred to as a CRAN or virtual baseband unit pool. The AN 1008 be referred to as a BS, gNB, RAN node, eNB, ng-eNB, NodeB, RSU, TRxP, TRP, etc. The AN 1008 may be a macrocell base station or a low power base station for providing femtocells, picocells or other like cells having smaller coverage areas, smaller user capacity, or higher bandwidth compared to macrocells.

In embodiments in which the RAN 1004 includes a plurality of ANs, they may be coupled with one another via an X2 interface (if the RAN 1004 is an LTE RAN) or an Xn interface (if the RAN 1004 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 1004 may each manage one or more cells, cell groups, component carriers, etc. to provide the UE 1002 with an air interface for network access. The UE 1002 may be simultaneously connected with a plurality of cells provided by the same or different ANs of the RAN 1004. For example, the UE 1002 and RAN 1004 may use carrier aggregation to allow the UE 1002 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 1004 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 1002 or AN 1008 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 1004 may be an LTE RAN 1010 with eNBs, for example, eNB 1012. The LTE RAN 1010 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 1004 may be an NG-RAN 1014 with gNBs, for example, gNB 1016, or ng-eNBs, for example, ng-eNB 1018. The gNB 1016 may connect with 5G-enabled UEs using a 5G NR interface. The gNB 1016 may connect with a 5G core through an NG interface, which may include an N2 interface or an N3 interface. The ng-eNB 1018 may also connect with the 5G core through an NG interface, but may connect with a UE via an LTE air interface. The gNB 1016 and the ng-eNB 1018 may connect with each other over an Xn interface.

In some embodiments, the NG interface may be split into two parts, an NG user plane (NG-U) interface, which carries traffic data between the nodes of the NG-RAN 1014 and a UPF 1048 (e.g., N3 interface), and an NG control plane (NG-C) interface, which is a signaling interface between the nodes of the NG-RAN1014 and an AMF 1044 (e.g., N2 interface).

The NG-RAN 1014 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 1002 can be configured with multiple BWPs where each BWP configuration has a different SCS. When a BWP change is indicated to the UE 1002, the SCS of the transmission is changed as well. Another use case example of BWP is related to power saving. In particular, multiple BWPs can be configured for the UE 1002 with different amount of frequency resources (for example, PRBs) to support data transmission under different traffic loading scenarios. A BWP containing a smaller number of PRBs can be used for data transmission with small traffic load while allowing power saving at the UE 1002 and in some cases at the gNB 1016. A BWP containing a larger number of PRBs can be used for scenarios with higher traffic load.

The RAN 1004 is communicatively coupled to CN 1020 that includes network elements to provide various functions to support data and telecommunications services to customers/subscribers (for example, users of UE 1002). The components of the CN 1020 may be implemented in one physical node or separate physical nodes. In some embodiments, NFV may be utilized to virtualize any or all of the functions provided by the network elements of the CN 1020 onto physical compute/storage resources in servers, switches, etc. A logical instantiation of the CN 1020 may be referred to as a network slice, and a logical instantiation of a portion of the CN 1020 may be referred to as a network sub-slice.

In some embodiments, the CN 1020 may be an LTE CN 1022, which may also be referred to as an EPC. The LTE CN 1022 may include MME 1024, SGW 1026, SGSN 1028, HSS 1030, PGW 1032, and PCRF 1034 coupled with one another over interfaces (or "reference points") as shown. Functions of the elements of the LTE CN 1022 may be briefly introduced as follows.

The MME 1024 may implement mobility management functions to track a current location of the UE 1002 to facilitate paging, bearer activation/deactivation, handovers, gateway selection, authentication, etc.

The SGW 1026 may terminate an S1 interface toward the RAN and route data packets between the RAN and the LTE CN 1022. The SGW 1026 may be a local mobility anchor point for inter-RAN node handovers and also may provide an anchor for inter-3GPP mobility. Other responsibilities may include lawful intercept, charging, and some policy enforcement.

The SGSN 1028 may track a location of the UE 1002 and perform security functions and access control. In addition, the SGSN 1028 may perform inter-EPC node signaling for mobility between different RAT networks; PDN and S-GW selection as specified by MME 1024; MME selection for handovers; etc. The S3 reference point between the MME 1024 and the SGSN 1028 may enable user and bearer information exchange for inter-3GPP access network mobility in idle/active states.

The HSS 1030 may include a database for network users, including subscription-related information to support the network entities' handling of communication sessions. The HSS 1030 can provide support for routing/roaming, authentication, authorization, naming/addressing resolution, location dependencies, etc. An S6a reference point between the HSS 1030 and the MME 1024 may enable transfer of subscription and authentication data for authenticating/authorizing user access to the LTE CN 1020.

The PGW 1032 may terminate an SGi interface toward a data network (DN) 1036 that may include an application/content server 1038. The PGW 1032 may route data packets between the LTE CN 1022 and the data network 1036. The PGW 1032 may be coupled with the SGW 1026 by an S5 reference point to facilitate user plane tunneling and tunnel management. The PGW 1032 may further include a node for policy enforcement and charging data collection (for example, PCEF). Additionally, the SGi reference point between the PGW 1032 and the data network 1036 may be an operator external public, a private PDN, or an intra-operator packet data network, for example, for provision of IMS services. The PGW 1032 may be coupled with a PCRF 1034 via a Gx reference point.

The PCRF 1034 is the policy and charging control element of the LTE CN 1022. The PCRF 1034 may be communicatively coupled to the app/content server 1038 to determine appropriate QoS and charging parameters for service flows. The PCRF 1032 may provision associated rules into a PCEF (via Gx reference point) with appropriate TFT and QCI.

In some embodiments, the CN 1020 may be a 5GC 1040. The 5GC 1040 may include an AUSF 1042, AMF 1044, SMF 1046, UPF 1048, NSSF 1050, NEF 1052, NRF 1054, PCF 1056, UDM 1058, and AF 1060 coupled with one another over interfaces (or "reference points") as shown. Functions of the elements of the 5GC 1040 may be briefly introduced as follows.

The AUSF 1042 may store data for authentication of UE 1002 and handle authentication-related functionality. The AUSF 1042 may facilitate a common authentication framework for various access types. In addition to communicating with other elements of the 5GC 1040 over reference points as shown, the AUSF 1042 may exhibit an Nausf service-based interface.

The AMF 1044 may allow other functions of the 5GC 1040 to communicate with the UE 1002 and the RAN 1004 and to subscribe to notifications about mobility events with respect to the UE 1002. The AMF 1044 may be responsible for registration management (for example, for registering UE 1002), connection management, reachability management, mobility management, lawful interception of AMF-related events, and access authentication and authorization. The AMF 1044 may provide transport for SM messages between the UE 1002 and the SMF 1046, and act as a transparent proxy for routing SM messages. AMF 1044 may also provide transport for SMS messages between UE 1002 and an SMSF. AMF 1044 may interact with the AUSF 1042 and the UE 1002 to perform various security anchor and context management functions. Furthermore, AMF 1044 may be a termination point of a RAN CP interface, which may include or be an N2 reference point between the RAN 1004 and the AMF 1044; and the AMF 1044 may be a termination point of NAS (N1) signaling, and perform NAS ciphering and integrity protection. AMF 1044 may also support NAS signaling with the UE 1002 over an N3 IWF interface.

The SMF 1046 may be responsible for SM (for example, session establishment, tunnel management between UPF 1048 and AN 1008); UE IP address allocation and management (including optional authorization); selection and control of UP function; configuring traffic steering at UPF 1048 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 1044 over N2 to AN 1008; and determining SSC mode of a session. SM may refer to management of a PDU session, and a PDU session or "session" may refer to a PDU connectivity service that provides or enables the exchange of PDUs between the UE 1002 and the data network 1036.

The UPF 1048 may act as an anchor point for intra-RAT and inter-RAT mobility, an external PDU session point of interconnect to data network 1036, and a branching point to support multi-homed PDU session. The UPF 1048 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 1048 may include an uplink classifier to support routing traffic flows to a data network.

The NSSF 1050 may select a set of network slice instances serving the UE 1002. The NSSF 1050 may also determine allowed NSSAI and the mapping to the subscribed S-NSSAIs, if needed. The NSSF 1050 may also determine the AMF set to be used to serve the UE 1002, or a list of candidate AMFs based on a suitable configuration and possibly by querying the NRF 1054. The selection of a set of network slice instances for the UE 1002 may be triggered by the AMF 1044 with which the UE 1002 is registered by interacting with the NSSF 1050, which may lead to a change of AMF. The NSSF 1050 may interact with the AMF 1044 via an N22 reference point; and may communicate with another NSSF in a visited network via an N31 reference point (not shown). Additionally, the NSSF 1050 may exhibit an Nnssf service-based interface.

The NEF 1052 may securely expose services and capabilities provided by 3GPP network functions for third party, internal exposure/re-exposure, AFs (e.g., AF 1060), edge computing or fog computing systems, etc. In such embodiments, the NEF 1052 may authenticate, authorize, or throttle the AFs. NEF 1052 may also translate information exchanged with the AF 1060 and information exchanged with internal network functions. For example, the NEF 1052 may translate between an AF-Service-Identifier and an internal 5GC information. NEF 1052 may also receive information from other NFs based on exposed capabilities of other NFs. This information may be stored at the NEF 1052 as structured data, or at a data storage NF using standardized interfaces. The stored information can then be re-exposed by the NEF 1052 to other NFs and AFs, or used for other purposes such as analytics. Additionally, the NEF 1052 may exhibit an Nnef service-based interface.

The NRF 1054 may support service discovery functions, receive NF discovery requests from NF instances, and provide the information of the discovered NF instances to the NF instances. NRF 1054 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 1054 may exhibit the Nnrf service-based interface.

The PCF 1056 may provide policy rules to control plane functions to enforce them, and may also support unified policy framework to govern network behavior. The PCF 1056 may also implement a front end to access subscription information relevant for policy decisions in a UDR of the UDM 1058. In addition to communicating with functions over reference points as shown, the PCF 1056 exhibit an Npcf service-based interface.

The UDM 1058 may handle subscription-related information to support the network entities' handling of communication sessions, and may store subscription data of UE 1002. For example, subscription data may be communicated via an N8 reference point between the UDM 1058 and the AMF 1044. The UDM 1058 may include two parts, an application front end and a UDR. The UDR may store subscription data and policy data for the UDM 1058 and the PCF 1056, and/or structured data for exposure and application data (including PFDs for application detection, application request information for multiple UEs 1002) for the NEF 1052. The Nudr service-based interface may be exhibited by the UDR 221 to allow the UDM 1058, PCF 1056, and NEF 1052 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 1058 may exhibit the Nudm service-based interface.

The AF 1060 may provide application influence on traffic routing, provide access to NEF, and interact with the policy framework for policy control.

In some embodiments, the 5GC 1040 may enable edge computing by selecting operator/3rd party services to be geographically close to a point that the UE 1002 is attached to the network. This may reduce latency and load on the network. To provide edge-computing implementations, the 5GC 1040 may select a UPF 1048 close to the UE 1002 and execute traffic steering from the UPF 1048 to data network 1036 via the N6 interface. This may be based on the UE subscription data, UE location, and information provided by the AF 1060. In this way, the AF 1060 may influence UPF (re)selection and traffic routing. Based on operator deployment, when AF 1060 is considered to be a trusted entity, the network operator may permit AF 1060 to interact directly with relevant NFs. Additionally, the AF 1060 may exhibit an Naf service-based interface.

The data network 1036 may represent various network operator services, Internet access, or third party services that may be provided by one or more servers including, for example, application/content server 1038.

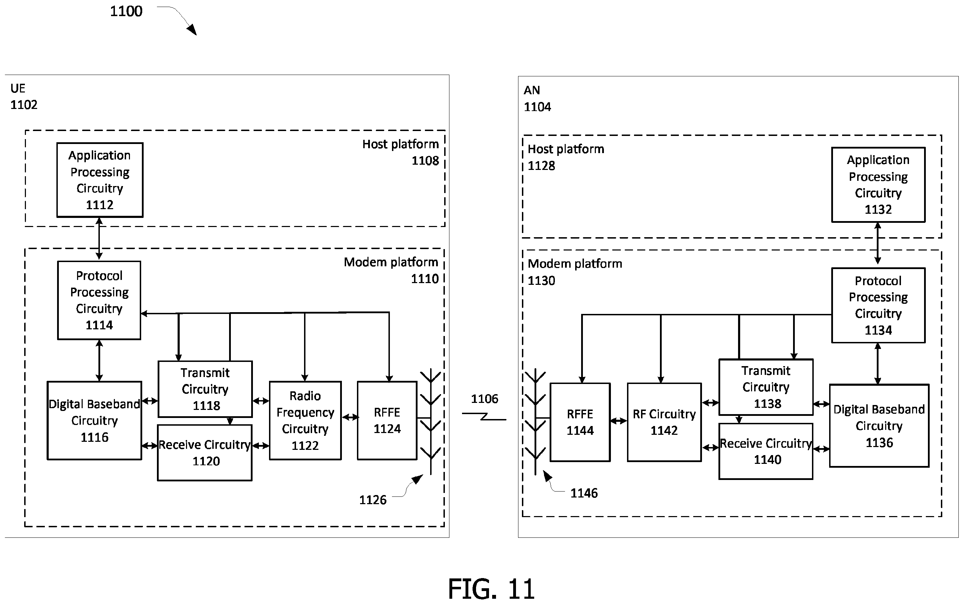

FIG. 11 schematically illustrates a wireless network 1100 in accordance with various embodiments. The wireless network 1100 may include a UE 1102 in wireless communication with an AN 1104. The UE 1102 and AN 1104 may be similar to, and substantially interchangeable with, like-named components described elsewhere herein.

The UE 1102 may be communicatively coupled with the AN 1104 via connection 1106. The connection 1106 is illustrated as an air interface to enable communicative coupling, and can be consistent with cellular communications protocols such as an LTE protocol or a 5G NR protocol operating at mmWave or sub-6GHz frequencies.

The UE 1102 may include a host platform 1108 coupled with a modem platform 1110. The host platform 1108 may include application processing circuitry 1112, which may be coupled with protocol processing circuitry 1114 of the modem platform 1110. The application processing circuitry 1112 may run various applications for the UE 1102 that source/sink application data. The application processing circuitry 1112 may further implement one or more layer operations to transmit/receive application data to/from a data network. These layer operations may include transport (for example UDP) and Internet (for example, IP) operations

The protocol processing circuitry 1114 may implement one or more of layer operations to facilitate transmission or reception of data over the connection 1106. The layer operations implemented by the protocol processing circuitry 1114 may include, for example, MAC, RLC, PDCP, RRC and NAS operations.

The modem platform 1110 may further include digital baseband circuitry 1116 that may implement one or more layer operations that are "below" layer operations performed by the protocol processing circuitry 1114 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 1110 may further include transmit circuitry 1118, receive circuitry 1120, RF circuitry 1122, and RF front end (RFFE) 1124, which may include or connect to one or more antenna panels 1126. Briefly, the transmit circuitry 1118 may include a digital-to-analog converter, mixer, intermediate frequency (IF) components, etc.; the receive circuitry 1120 may include an analog-to-digital converter, mixer, IF components, etc.; the RF circuitry 1122 may include a low-noise amplifier, a power amplifier, power tracking components, etc.; RFFE 1124 may include filters (for example, surface/bulk acoustic wave filters), switches, antenna tuners, beamforming components (for example, phase-array antenna components), etc. The selection and arrangement of the components of the transmit circuitry 1118, receive circuitry 1120, RF circuitry 1122, RFFE 1124, and antenna panels 1126 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 1114 may include one or more instances of control circuitry (not shown) to provide control functions for the transmit/receive components.

A UE reception may be established by and via the antenna panels 1126, RFFE 1124, RF circuitry 1122, receive circuitry 1120, digital baseband circuitry 1116, and protocol processing circuitry 1114. In some embodiments, the antenna panels 1126 may receive a transmission from the AN 1104 by receive-beamforming signals received by a plurality of antennas/antenna elements of the one or more antenna panels 1126.

A UE transmission may be established by and via the protocol processing circuitry 1114, digital baseband circuitry 1116, transmit circuitry 1118, RF circuitry 1122, RFFE 1124, and antenna panels 1126. In some embodiments, the transmit components of the UE 1104 may apply a spatial filter to the data to be transmitted to form a transmit beam emitted by the antenna elements of the antenna panels 1126.

Similar to the UE 1102, the AN 1104 may include a host platform 1128 coupled with a modem platform 1130. The host platform 1128 may include application processing circuitry 1132 coupled with protocol processing circuitry 1134 of the modem platform 1130. The modem platform may further include digital baseband circuitry 1136, transmit circuitry 1138, receive circuitry 1140, RF circuitry 1142, RFFE circuitry 1144, and antenna panels 1146. The components of the AN 1104 may be similar to and substantially interchangeable with like-named components of the UE 1102. In addition to performing data transmission/reception as described above, the components of the AN 1108 may perform various logical functions that include, for example, RNC functions such as radio bearer management, uplink and downlink dynamic radio resource management, and data packet scheduling.

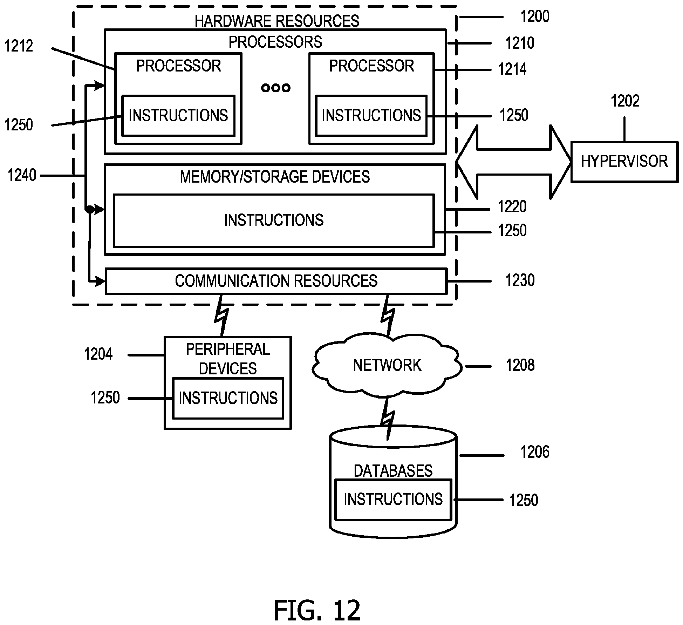

FIG. 12 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 12 shows a diagrammatic representation of hardware resources 1200 including one or more processors (or processor cores) 1210, one or more memory/storage devices 1220, and one or more communication resources 1230, each of which may be communicatively coupled via a bus 1240 or other interface circuitry. For embodiments where node virtualization (e.g., NFV) is utilized, a hypervisor 1202 may be executed to provide an execution environment for one or more network slices/sub-slices to utilize the hardware resources 1200.

The processors 1210 may include, for example, a processor 1212 and a processor 1214. The processors 1210 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 1220 may include main memory, disk storage, or any suitable combination thereof. The memory/storage devices 1220 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 1230 may include interconnection or network interface controllers, components, or other suitable devices to communicate with one or more peripheral devices 1204 or one or more databases 1206 or other network elements via a network 1208. For example, the communication resources 1230 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 1250 may comprise software, a program, an application, an applet, an app, or other executable code for causing at least any of the processors 1210 to perform any one or more of the methodologies discussed herein. The instructions 1250 may reside, completely or partially, within at least one of the processors 1210 (e.g., within the processor's cache memory), the memory/storage devices 1220, or any suitable combination thereof. Furthermore, any portion of the instructions 1250 may be transferred to the hardware resources 1200 from any combination of the peripheral devices 1204 or the databases 1206. Accordingly, the memory of processors 1210, the memory/storage devices 1220, the peripheral devices 1204, and the databases 1206 are examples of computer-readable and machine-readable media.

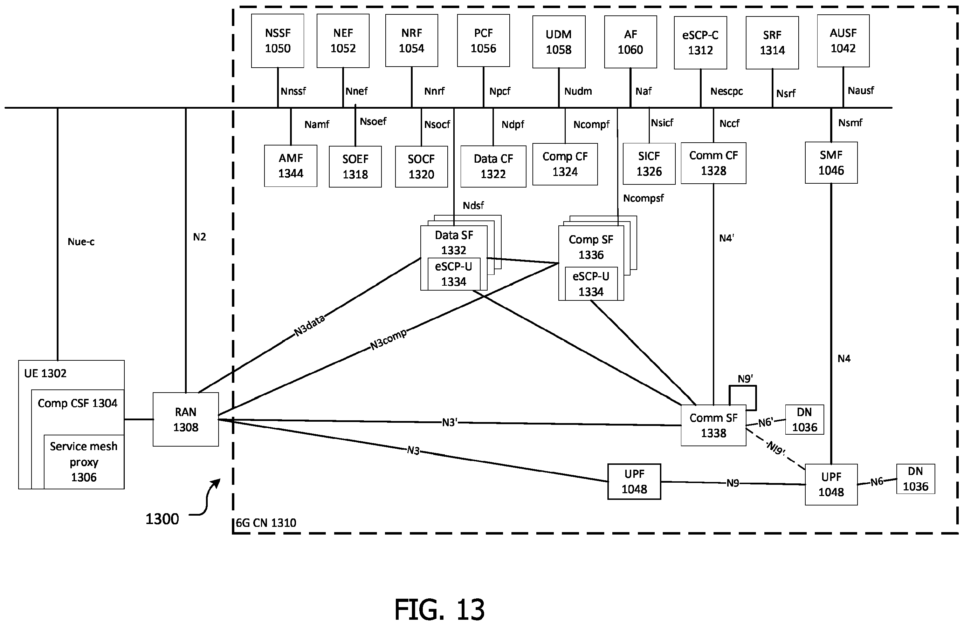

FIG. 13 illustrates a network 1300 in accordance with various embodiments. The network 1300 may operate in a matter consistent with 3GPP technical specifications or technical reports for 6G systems. In some embodiments, the network 1300 may operate concurrently with network 1000. For example, in some embodiments, the network 1300 may share one or more frequency or bandwidth resources with network 1000. As one specific example, a UE (e.g., UE 1302) may be configured to operate in both network 1300 and network 1000. Such configuration may be based on a UE including circuitry configured for communication with frequency and bandwidth resources of both networks 1000 and 1300. In general, several elements of network 1300 may share one or more characteristics with elements of network 1000. For the sake of brevity and clarity, such elements may not be repeated in the description of network 1300.

The network 1300 may include a UE 1302, which may include any mobile or non-mobile computing device designed to communicate with a RAN 1308 via an over-the-air connection. The UE 1302 may be similar to, for example, UE 1002. The UE 1302 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

Although not specifically shown in Figure 13, in some embodiments the network 1300 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. Similarly, although not specifically shown in Figure 13, the UE 1302 may be communicatively coupled with an AP such as AP 1006 as described with respect to Figure 10. Additionally, although not specifically shown in Figure 13, in some embodiments the RAN 1308 may include one or more ANss such as AN 1008 as described with respect to Figure 10. The RAN 1308 and/or the AN of the RAN 1308 may be referred to as a base station (BS), a RAN node, or using some other term or name.

The UE 1302 and the RAN 1308 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 1308 may allow for communication between the UE 1302 and a 6G core network (CN) 1310. Specifically, the RAN 1308 may facilitate the transmission and reception of data between the UE 1302 and the 6G CN 1310. The 6G CN 1310 may include various functions such as NSSF 1050, NEF 1052, NRF 1054, PCF 1056, UDM 1058, AF 1060, SMF 1046, and AUSF 1042. The 6G CN 1310 may additional include UPF 1048 and DN 1036 as shown in Figure 13.

Additionally, the RAN 1308 may include various additional functions that are in addition to, or alternative to, functions of a legacy cellular network such as a 4G or 5G network. Two such functions may include a Compute Control Function (Comp CF) 1324 and a Compute Service Function (Comp SF) 1336. The Comp CF 1324 and the Comp SF 1336 may be parts or functions of the Computing Service Plane. Comp CF 1324 may be a control plane function that provides functionalities such as management of the Comp SF 1336, computing task context generation and management (e.g., create, read, modify, delete), interaction with the underlaying computing infrastructure for computing resource management, etc.. Comp SF 1336 may be a user plane function that serves as the gateway to interface computing service users (such as UE 1302) and computing nodes behind a Comp SF instance. Some functionalities of the Comp SF 1336 may include: parse computing service data received from users to compute tasks executable by computing nodes; hold service mesh ingress gateway or service API gateway; service and charging policies enforcement; performance monitoring and telemetry collection, etc. In some embodiments, a Comp SF 1336 instance may serve as the user plane gateway for a cluster of computing nodes. A Comp CF 1324 instance may control one or more Comp SF 1336 instances.

Two other such functions may include a Communication Control Function (Comm CF) 1328 and a Communication Service Function (Comm SF) 1338, which may be parts of the Communication Service Plane. The Comm CF 1328 may be the control plane function for managing the Comm SF 1338, communication sessions creation/configuration/releasing, and managing communication session context. The Comm SF 1338 may be a user plane function for data transport. Comm CF 1328 and Comm SF 1338 may be considered as upgrades of SMF 1046 and UPF 1048, which were described with respect to a 5G system in Figure 10. The upgrades provided by the Comm CF 1328 and the Comm SF 1338 may enable service-aware transport. For legacy (e.g., 4G or 5G) data transport, SMF 1046 and UPF 1048 may still be used.

Two other such functions may include a Data Control Function (Data CF) 1322 and Data Service Function (Data SF) 1332 may be parts of the Data Service Plane. Data CF 1322 may be a control plane function and provides functionalities such as Data SF 1332 management, Data service creation/configuration/releasing, Data service context management, etc. Data SF 1332 may be a user plane function and serve as the gateway between data service users (such as UE 1302 and the various functions of the 6G CN 1310) and data service endpoints behind the gateway. Specific functionalities may include: parse data service user data and forward to corresponding data service endpoints, generate charging data, report data service status.

Another such function may be the Service Orchestration and Chaining Function (SOCF) 1320, which may discover, orchestrate and chain up communication/computing/data services provided by functions in the network. Upon receiving service requests from users, SOCF 1320 may interact with one or more of Comp CF 1324, Comm CF 1328, and Data CF 1322 to identify Comp SF 1336, Comm SF 1338, and Data SF 1332 instances, configure service resources, and generate the service chain, which could contain multiple Comp SF 1336, Comm SF 1338, and Data SF 1332 instances and their associated computing endpoints. Workload processing and data movement may then be conducted within the generated service chain. The SOCF 1320 may also responsible for maintaining, updating, and releasing a created service chain.

Another such function may be the service registration function (SRF) 1314, which may act as a registry for system services provided in the user plane such as services provided by service endpoints behind Comp SF 1336 and Data SF 1332 gateways and services provided by the UE 1302. The SRF 1314 may be considered a counterpart of NRF 1054, which may act as the registry for network functions.

Other such functions may include an evolved service communication proxy (eSCP) and service infrastructure control function (SICF) 1326, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 1312 and eSCP-U 1334, for control plane service communication proxy and user plane service communication proxy, respectively. The SICF 1326 may control and configure eCSP instances in terms of service traffic routing policies, access rules, load balancing configurations, performance monitoring, etc.

Another such function is the AMF 1344. The AMF 1344 may be similar to 1044, but with additional functionality. Specifically, the AMF 1344 may include potential functional repartition, such as move the message forwarding functionality from the AMF 1344 to the RAN 1308.

Another such function is the service orchestration exposure function (SOEF) 1318. The SOEF may be configured to expose service orchestration and chaining services to external users such as applications.

The UE 1302 may include an additional function that is referred to as a computing client service function (comp CSF) 1304. The comp CSF 1304 may have both the control plane functionalities and user plane functionalities, and may interact with corresponding network side functions such as SOCF 1320, Comp CF 1324, Comp SF 1336, Data CF 1322, and/or Data SF 1332 for service discovery, request/response, compute task workload exchange, etc. The Comp CSF 1304 may also work with network side functions to decide on whether a computing task should be run on the UE 1302, the RAN 1308, and/or an element of the 6G CN 1310.

The UE 1302 and/or the Comp CSF 1304 may include a service mesh proxy 1306. The service mesh proxy 1306 may act as a proxy for service-to-service communication in the user plane. Capabilities of the service mesh proxy 1306 may include one or more of addressing, security, load balancing, etc.

### EXAMPLE PROCEDURES

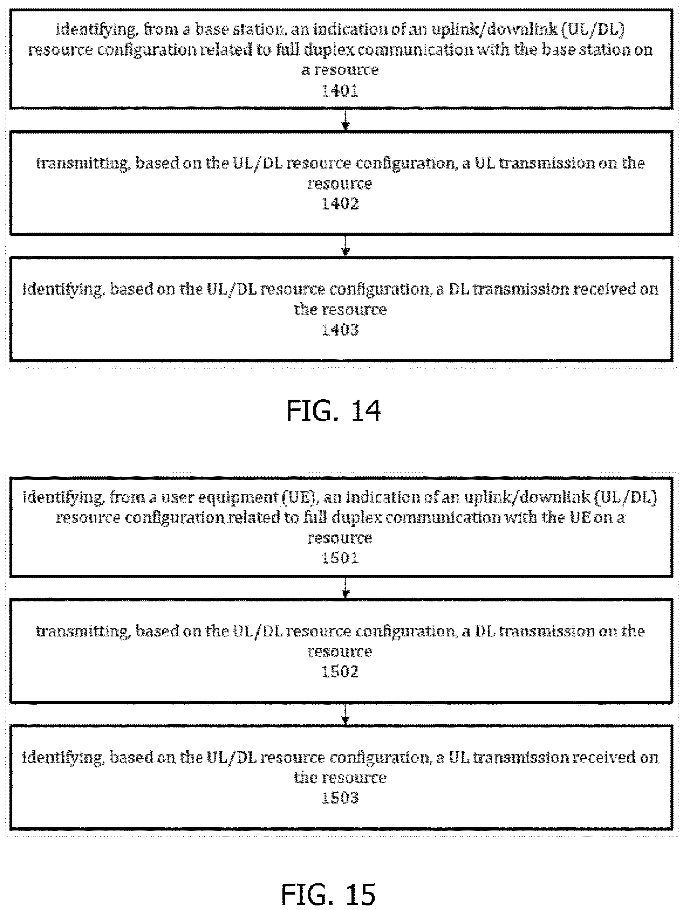

In some embodiments, the electronic device(s), network(s), system(s), chip(s) or component(s), or portions or implementations thereof, of Figures 10-12, or some other figure herein, may be configured to perform one or more processes, techniques, or methods as described herein, or portions thereof. One such process is depicted in FIG. 14. The process of Figure 14 may be performed by a UE, an electronic device that includes a UE, and/or a portion of a UE. The process may include: identifying, at 1401 from a base station, an indication of an uplink/downlink (UL/DL) resource configuration related to full duplex communication with the base station on a resource; transmitting, at 1402 based on the UL/DL resource configuration, a UL transmission on the resource; and identifying, at 1403 based on the UL/DL resource configuration, a DL transmission received on the resource.

Another such process is depicted in FIG. 15. The process of FIG. 15 may be performed by a base station, an electronic device that includes the base station, and/or a portion of the base station. The process may include: transmitting, at 1501 to a user equipment (UE), an indication of an uplink/downlink (UL/DL) resource configuration related to full duplex communication with the UE on a resource; transmitting, at 1502 based on the UL/DL resource configuration, a DL transmission on the resource; and identifying, at 1503 based on the UL/DL resource configuration, a UL transmission received on the resource.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include the system and methods of DL reception and UL transmission in full duplex system comprising
configuring, by a gNB, UL and DL resource within the serving cell or BWP bandwidth for different symbols.
receiving, by a UE, the UL and DL resource configuration,
receiving, by a UE, the UL/DL signals configuration, and/or the DCI scheduling the UL/DL signals,
determining, by a UE, transmit UL or receive DL.

Example 2 may include the method of example 1 or some other example herein, where the UL and DL resource configuration includes time domain configuration of UL/DL/Flexible and Non-overlapped full duplex (NOSB-FD) symbol and sub-band information for NOSB-FD symbol.

Example 3 may include the method of example 2 or some other example herein, where the time domain configuration of UL/DL/Flexible and Non-overlapped full duplex (NOSB-FD) symbol includes slot and symbol location and UL/DL/Flexible/NOSB-FD attribute for the symbol

Example 4 may include the method of example 3 or some other example herein, where the time domain configuration of UL/DL/Flexible symbol and NOSB-FD symbol is jointly or separately configured.

Example 5 may include the method of example 2 or some other example herein, where the sub-band information for NOSB-FD symbol includes at least one of PRB information for the sub-band, sub-carrier spacing (SCS) for the sub-band, guard-band for the sub-band, the number of sub-bands, the attribute for the sub-band.

Example 6 may include the method of example 2 or some other example herein, where the time domain configuration of UL/DL/Flexible/NOSB-FD symbol and sub-band information for NOSB-FD symbol is jointly or separately configured.

Example 7 may include the method of example 2 or some other example herein, where the time domain configuration of UL/DL/Flexible/NOSB-FD symbol and sub-band information for NOSB-FD symbol is configured by higher-layer signaling and/or dynamic signaling.

Example 8 may include the method of example 2 or some other example herein, wherein the DL/UL/Flexible resource for a NOSB-FD symbol is determined according to time domain configuration of UL/DL/Flexible/NOSB-FD symbol and sub-band information for NOSB-FD symbol.

Example 9 may include the method of example 2 or some other example herein, wherein if the UL and DL resource configuration is provided by cell-specific signaling and UE-specific signaling, the NOSB-FD provided by the UE-specific signaling overrides only a sub-set of the UL/DL/Flexible symbols provided by the cell-specific signaling, or the UL/DL/Flexible symbols provided by the UE-specific signaling overrides only a sub-set of the NOSB-FD symbols provided by the cell-specific signaling.

Example 10 may include the method of example 2 or some other example herein, wherein if the UL and DL resource configuration is provided by higher-layer signaling and dynamic signaling, the NOSB-FD provided by the dynamic signaling overrides only a sub-set of the UL/DL/Flexible symbols provided by the higher-layer signaling, or the UL/DL/Flexible symbols provided by the dynamic signaling overrides only a sub-set of the NOSB-FD symbols provided by the higher-layer signaling.

Example 11 may include the method of example 9 and example 10 or some other example herein, wherein the sub-set of UL/DL/Flexible symbols or the sub-set of NOSB-FD symbols is configured by gNB and/or determined by pre-defined rule.

Example 12 may include the method of example 10 or some other example herein, wherein if a higher layer-configured channel/signal overlapping with at least one symbol within the sub-set may be fully or partially cancelled, if UE does not detect a valid dynamic signaling.

Example 13 includes a method to be performed by a user equipment (UE), or portion thereof, wherein the method comprises: identifying, from a base station, an indication of an uplink/downlink (UL/DL) resource configuration related to full duplex communication with the base station on a resource; transmitting, based on the UL/DL resource configuration, a UL transmission on the resource; and identifying, based on the UL/DL resource configuration, a DL transmission received on the resource.

Example 14 includes the method of example 13, and/or some other example herein, wherein the full duplex communication is full duplex time division duplexed (TDD) communication.

Example 15 includes the method of example 13, and/or some other example herein, wherein the full duplex communication is non-overlapped full duplex (NOSB-FD) communication.

Example 16 includes the method of any of examples 13-15, and/or some other example herein, wherein the resource is a symbol.

Example 17 includes the method of any of examples 13-16, and/or some other example herein, wherein the indication of the UL/DL resource configuration is received in UL/DL signals configuration and/or downlink control information (DCI) scheduling information.

Example 18 includes the method of any of examples 13-16, and/or some other example herein, wherein the indication of the UL/DL resource configuration is received in radio resource control (RRC) signaling, system information (SUI), slot format information (SFI) in downlink control information (DCI), or higher layer cell-specific or UE-specific TDD configuration information.

Example 19 includes the method of any of examples 13-16, and/or some other example herein, wherein the UL/DL resource configuration relates to UL/DL/Flexible and Non-overlapped full duplex (NOSB-FD) symbol information that includes slot and symbol location and UL/DL/Flexible/NOSB-FD attribute(s) for the symbol.

Example 20 includes a method to be performed by a base station, wherein the method comprises: transmitting, to a user equipment (UE), an indication of an uplink/downlink (UL/DL) resource configuration related to full duplex communication with the UE on a resource; transmitting, based on the UL/DL resource configuration, a DL transmission on the resource; and identifying, based on the UL/DL resource configuration, a UL transmission received on the resource.

Example 21 includes the method of example 20, and/or some other example herein, wherein the full duplex communication is full duplex time division duplexed (TDD) communication.

Example 22 includes the method of example 20, and/or some other example herein, wherein the full duplex communication is non-overlapped full duplex (NOSB-FD) communication.

Example 23 includes the method of any of examples 20-22, and/or some other example herein, wherein the resource is a symbol.

Example 24 includes the method of any of examples 20-23, and/or some other example herein, wherein the indication of the UL/DL resource configuration is transmitted in UL/DL signals configuration and/or downlink control information (DCI) scheduling information.

Example 25 includes the method of any of examples 20-23, and/or some other example herein, wherein the indication of the UL/DL resource configuration is transmitted or provided in radio resource control (RRC) signaling, system information (SUI), slot format information (SFI) in downlink control information (DCI), or higher layer cell-specific or UE-specific TDD configuration information.

Example 26 includes the method of any of examples 20-25, and/or some other example herein, wherein the UL/DL resource configuration relates to UL/DL/Flexible and Non-overlapped full duplex (NOSB-FD) symbol information that includes slot and symbol location and UL/DL/Flexible/NOSB-FD attribute(s) for the symbol.

Example Z01 may include an apparatus comprising means to perform one or more elements of a method described in or related to any of examples 1-26, or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-26, or any other method or process described herein.

Example Z03 may include an apparatus comprising logic, modules, or circuitry to perform one or more elements of a method described in or related to any of examples 1-26, or any other method or process described herein.

Example Z04 may include a method, technique, or process as described in or related to any of examples 1-26, or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-26, or portions thereof.

Example Z06 may include a signal as described in or related to any of examples 1-26, or portions or parts thereof.

Example Z07 may include a datagram, packet, frame, segment, protocol data unit (PDU), or message as described in or related to any of examples 1-26, or portions or parts thereof, or otherwise described in the present disclosure.

Example Z08 may include a signal encoded with data as described in or related to any of examples 1-26, or portions or parts thereof, or otherwise described in the present disclosure.

Example Z09 may include a signal encoded with a datagram, packet, frame, segment, protocol data unit (PDU), or message as described in or related to any of examples 1-26, or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-26, or portions thereof.

Example Z11 may include a computer program comprising instructions, wherein execution of the program by a processing element is to cause the processing element to carry out the method, techniques, or process as described in or related to any of examples 1-26, or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

In Example 1A, the subject matter includes an apparatus of a User Equipment (UE) for mobile communication, the apparatus may include a radio frequency (RF) interface and one or more processors coupled to the RF interface, the one or more processors configured to: identify, from a base station, information representative of an uplink and downlink (UL/DL) resource configuration related to a full duplex communication with the base station; identify a sub-band of a plurality of sub-bands of a carrier bandwidth as one of a sub-band for DL or a sub-band of UL, based on the UL/DL resource configuration; cause the UE to receive or transmit within a resource of the sub-band based on the identification of the sub-band.

In Example 2A, the subject matter of Example 1A or any one of Examples provided herein can optionally include that the full duplex communication includes a non-overlapping sub-band full duplex communication (NOSB-FD), or alternatively a sub-band full duplex communication (SB-FD) in which at least some of the sub-bands can be partially or fully overlapped.

In Example 3A, the subj ect matter of Example 2A or any one of Examples provided herein can optionally include that the information is provided to the UE via a cell specific higher layer signaling; can optionally include that the UL/DL resource configuration is specific to the serving cell.

In Example 4A, the subject matter of Example 2A or any one of Examples provided herein can optionally include that the information is provided to the UE via a UE specific higher layer signaling; and can optionally include that the UL/DL resource configuration is at least one of: specific to the serving cell or specific to a configured bandwidth part (BWP) for the UE.

In Example 5A, the subj ect matter of Example 2A or any one of Examples provided herein, can optionally include that the full duplex communication includes a NOSB-FD and the information is provided to the UE via a dynamic Layer 1 signaling; and can optionally include that the UL/DL resource configuration is at least one of: specific to the serving cell or specific to a configured bandwidth part (BWP) for the UE.

In Example 6A, the subject matter of any one of Examples 1A to 5A or any one of Examples provided herein can optionally include that the UL/DL resource configuration is representative of at least one of one or more first sub-bands of a bandwidth for UL in a time resource and one or more second sub-bands of the bandwidth for DL in the time resource, the one or more second sub-bands different from the one or more first sub-bands.

In Example 7A, the subject matter of any one of Examples 1A to 6A or any one of Examples provided herein can optionally include that the UL/DL resource configuration includes a configuration of a sub-band; and can optionally include that the sub-band is represented by a reference frequency or a common resource block 0 and a reference subcarrier spacing.

In Example 8A, the subject matter of any one of Examples 1A to 6A or any one of Examples provided herein can optionally include that the UL/DL resource configuration includes a configuration of a sub-band; and can optionally include that the sub-band is represented by a start physical resource block (PRB) and bandwidth information.

In Example 9A, the subject matter of any one of Examples 1A to 8A or any one of Examples provided herein can optionally include that the one or more processors are further configured identify a flexible resource in which the UE is capable to either transmit or receive based on the UL/DL resource configuration.

In Example 10A, the subject matter of any one of examples 1A to 9A or any one of Examples provided herein can optionally include that the UL/DL resource configuration further includes symbol information representative of UL/DL resource configuration in time domain.

In Example 11A, the subject matter of any one of examples 1A to 10A or any one of Examples provided herein can optionally include that the one or more processors are further configured to identify symbol information representative of UL/DL resource configuration in time domain from further information received via at least one of a cell specific higher layer signaling; a UE specific higher layer signaling, or a dynamic signaling.

In Example 12A, the subject matter of Example 10A or Example 11A or any one of Examples provided herein can optionally include that the one or more processors are further configured to cause the UE to receive or transmit within the resource of the sub-band based on the symbol information associated with the resource.

In Example 13A, the subject matter of any one of examples 1A to 12A or any one of Examples provided herein can optionally include that the one or more processors are further configured to determine a guard band specific to the sub-band based on the UL/DL resource configuration.

In Example 14A, the subject matter of any one of examples 1A to 13A or any one of Examples provided herein can optionally include that the plurality of sub-bands includes a first sub-band configured for DL and a second sub-band configured for UL for the same time resource.

In Example 15A, the subject matter includes a method to be performed by a User Equipment (UE), the method may include: identifying, from a base station, information representative of an uplink and downlink (UL/DL) resource configuration related to a full duplex communication with the base station; identifying a sub-band of a plurality of sub-bands of a carrier bandwidth as one of a sub-band for DL or a sub-band of UL, based on the UL/DL resource configuration; and receiving or transmitting within a resource of the sub-band based on the identification of the sub-band.

In Example 16A, the subject matter of Example 15A or any one of Examples provided herein can optionally include that the full duplex communication includes a non-overlapping sub-band full duplex communication (NOSB-FD) or alternatively a sub-band full duplex communication (SB-FD) in which at least some of the sub-bands can be partially or fully overlapped.

In Example 17A, the subject matter of Example 16A or any one of Examples provided herein can optionally include that the information is provided to the UE via a cell specific higher layer signaling; can optionally include that the UL/DL resource configuration is specific to the serving cell.

In Example 18A, the subject matter of Example 16A or any one of Examples provided herein can optionally include that the information is provided to the UE via a UE specific higher layer signaling; and can optionally include that the UL/DL resource configuration is at least one of: specific to the serving cell or specific to a configured bandwidth part (BWP) for the UE.

In Example 19A, the subject matter of Example 16A or any one of Examples provided herein, can optionally include that the full duplex communication includes a NOSB-FD and the information is provided to the UE via a dynamic Layer 1 signaling; and can optionally include that the UL/DL resource configuration is at least one of: specific to the serving cell or specific to a configured bandwidth part (BWP) for the UE.

In Example 20A, the subject matter of any one of Examples 15A to 19A or any one of Examples provided herein can optionally include that the UL/DL resource configuration is representative of at least one of one or more first sub-bands of a bandwidth for UL in a time resource and one or more second sub-bands of the bandwidth for DL in the time resource, the one or more second sub-bands different from the one or more first sub-bands.

In Example 21A, the subject matter of any one of Examples 15A to 20A or any one of Examples provided herein can optionally include that the UL/DL resource configuration includes a configuration of a sub-band; and can optionally include that the sub-band is represented by a reference frequency or a common resource block 0 and a reference subcarrier spacing.

In Example 22A, the subject matter of any one of Examples 15A to 21A or any one of Examples provided herein can optionally include that the UL/DL resource configuration includes a configuration of a sub-band; and can optionally include that the sub-band is represented by a start physical resource block (PRB) and bandwidth information.

In Example 23A, the subject matter of any one of Examples 15A to 22A or any one of Examples provided herein, may further include: identifying a flexible resource in which the UE is capable to either transmit or receive based on the UL/DL resource configuration.

In Example 24A, the subject matter of any one of Examples 15A to 23A or any one of Examples provided herein can optionally include that the UL/DL resource configuration further includes symbol information representative of UL/DL resource configuration in time domain.

In Example 25A, the subject matter of any one of Examples 15A to 24A or any one of Examples provided herein, may further include: identifying symbol information representative of UL/DL resource configuration in time domain from further information received via at least one of a cell specific higher layer signaling; a UE specific higher layer signaling, or a dynamic signaling.

In Example 26A, the subject matter of Example 24A or Example 25A or any one of Examples provided herein, may further include: causing the UE to receive or transmit within the resource of the sub-band based on the symbol information associated with the resource.

In Example 27A, the subject matter of any one of Examples 15A to 26A or any one of Examples provided herein, may further include: determining a guard band specific to the sub-band based on the UL/DL resource configuration.

In Example 28A, the subject matter of any one of Examples 15A to 27A or any one of Examples provided herein can optionally include that the plurality of sub-bands includes a first sub-band configured for DL and a second sub-band configured for UL for the same time resource.

In Example 29A, the subject matter includes a non-transitory computer-readable medium that may include one or more instructions which, if executed by a processor, cause the processor to perform the method of any one of Examples 15A to Examples 28A.

In Example 30A, the subject matter includes an apparatus of a Base Station (BS) for mobile communication, the apparatus may include a radio frequency (RF) interface and one or more processors coupled to the RF interface, the one or more processors configured to: configure uplink (UL) and downlink (DL) resources for a full duplex communication via a plurality of sub-bands at a time resource; can optionally include that the plurality of sub-bands includes one or more first sub-bands configured as uplink resources and one or more second sub-bands configured as downlink resources; and provide, to the RF interface for a transmission to a user equipment (UE), an UL and DL (UL/DL) resource configuration representative of the configured UL and DL resources.

In Example 31A, the subject matter of Example 30A or any one of Examples provided herein, can optionally include that the full duplex communication includes a non-overlapping sub-band full duplex communication (NOSB-FD) or alternatively a sub-band full duplex communication (SB-FD) in which at least some of the sub-bands can be partially or fully overlapped.

In Example 32A, the subject matter of Example 31A or any one of Examples provided herein can optionally include that the UL/DL resource configuration is transmitted to the UE via a cell specific higher layer signaling; can optionally include that the UL/DL resource configuration is specific to the serving cell.

In Example 33A, the subject matter of Example 31A or any one of Examples provided herein can optionally include that the UL/DL resource configuration is transmitted to the UE via a UE specific higher layer signaling; and can optionally include that the UL/DL resource configuration is at least one of: specific to the serving cell or specific to a configured bandwidth part (BWP) for the UE.

In Example 34A, the subject matter of Example 31A or any one of Examples provided herein, can optionally include that the information is provided to the UE via a dynamic Layer 1 signaling; and can optionally include that the UL/DL resource configuration is at least one of: specific to the serving cell or specific to a configured bandwidth part (BWP) for the UE.

In Example 35A, the subject matter of any one of Examples 30A to 34A or any one of Examples provided herein can optionally include that the time resource is a symbol.

In Example 36A, the subject matter of any one of Examples 30A to 35A or any one of Examples provided herein can optionally include that the configured UL/DL resources are for a first bandwidth; and can optionally include that the one or more processors are further configured to further UL and DL resources for a second bandwidth; can optionally include that the second bandwidth is identified based on the first bandwidth.

In Example 37A, the subject matter of Example 36A or any one of Examples provided herein can optionally include that the first bandwidth is associated with a first subcarrier spacing; and can optionally include that the second bandwidth is associated with a second subcarrier spacing referencing to the first subcarrier spacing.

In Example 38A, the subject matter of any one of Examples 30A to 37A or any one of Examples provided herein can optionally include that the UL/DL resource configuration includes a configuration of a sub-band of the one or more first sub-bands or the one or more second sub-bands; and can optionally include that the sub-band is represented by a reference frequency or a common resource block 0 and a reference subcarrier spacing.

In Example 39A, the subject matter of any one of Examples 30A to 37A or any one of Examples provided herein can optionally include that the UL/DL resource configuration includes a configuration of a sub-band of the one or more first sub-bands or the one or more second sub-bands; and can optionally include that the sub-band is represented by a start physical resource block (PRB) and bandwidth information.

In Example 40A, the subject matter of any one of Examples 30A to 39A or any one of Examples provided herein can optionally include that the plurality of sub-bands includes one or more third sub-bands configured for flexible configuration in which the UE may perform UL or DL communication within the one or more third sub-bands.

In Example 41A, the subject matter of any one of Examples 30A to 40A or any one of Examples provided herein, can optionally include that the UL/DL resource configuration further includes symbol information representative of time domain resources for the plurality of sub-bands.

In Example 42A, the subject matter includes a method to be performed by a base station (BS), the method may include: configuring uplink (UL) and downlink (DL) resources for a full duplex communication via a plurality of sub-bands at a time resource; can optionally include that the plurality of sub-bands includes one or more first sub-bands configured as uplink resources and one or more second sub-bands configured as downlink resources; and providing, to the RF interface for a transmission to a user equipment (UE), an UL and DL (UL/DL) resource configuration representative of the configured UL and DL resources.

In Example 43A, the subject matter of Example 42A or any one of Examples provided herein, can optionally include that the full duplex communication includes a non-overlapping sub-band full duplex communication (NOSB-FD) or alternatively a sub-band full duplex communication (SB-FD) in which at least some of the sub-bands can be partially or fully overlapped.

In Example 44A, the subject matter of Example 43A or any one of Examples provided herein, may further include: transmitting the UL/DL resource configuration to the UE via a cell specific higher layer signaling; can optionally include that the UL/DL resource configuration is specific to the serving cell.

In Example 45A, the subject matter of Example 43A or any one of Examples provided herein, may further include: transmitting the UL/DL resource configuration the UE via a UE specific higher layer signaling; and can optionally include that the UL/DL resource configuration is at least one of: specific to the serving cell or specific to a configured bandwidth part (BWP) for the UE.

In Example 46A, the subject matter of Example 45A or any one of Examples provided herein, may further include: transmitting the UL/DL resource configuration is provided to the UE via a dynamic Layer 1 signaling; and can optionally include that the UL/DL resource configuration is at least one of: specific to the serving cell or specific to a configured bandwidth part (BWP) for the UE.

In Example 47A, the subject matter of any one of Examples 42A to 46A or any one of Examples provided herein can optionally include that the time resource is a symbol.

In Example 48A, the subject matter of any one of Examples 42A to 46A or any one of Examples provided herein can optionally include that the configured UL/DL resources are for a first bandwidth; and can optionally include that the method further includes configuring further UL and DL resources for a second bandwidth; can optionally include that the second bandwidth is identified based on the first bandwidth.

In Example 49A, the subject matter of Example 48A or any one of Examples provided herein can optionally include that the first bandwidth is associated with a first subcarrier spacing; and can optionally include that the second bandwidth is associated with a second subcarrier spacing referencing to the first subcarrier spacing.

In Example 50A, the subject matter of any one of Examples 42A to 49A or any one of Examples provided herein can optionally include that the UL/DL resource configuration includes a configuration of a sub-band of the one or more first sub-bands or the one or more second sub-bands; and can optionally include that the sub-band is represented by a reference frequency or a common resource block 0 and a reference subcarrier spacing.

In Example 51A, the subject matter of any one of Examples 42A to 50A or any one of Examples provided herein can optionally include that the UL/DL resource configuration includes a configuration of a sub-band of the one or more first sub-bands or the one or more second sub-bands; and can optionally include that the sub-band is represented by a start physical resource block (PRB) and bandwidth information.

In Example 52A, the subject matter of any one of Examples 42A to 51A or any one of Examples provided herein can optionally include that the plurality of sub-bands includes one or more third sub-bands configured for flexible configuration in which the UE may perform UL or DL communication within the one or more third sub-bands.

In Example 53A, the subject matter of any one of Examples 42A to 52A or any one of Examples provided herein, can optionally include that the UL/DL resource configuration further includes symbol information representative of time domain resources for the plurality of sub-bands.

In Example 54A, a non-transitory computer-readable medium may include one or more instructions which, if executed by a processor, cause the processor to perform the method of any one of Examples 42A to Example 53A.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

3GPP may refer to Third Generation Partnership Project; 4G may refer to Fourth Generation; 5G may refer to Fifth Generation; 5GC may refer to 5G Core network; AC may refer to Application Client; ACR may refer to Application Context Relocation; ACK may refer to Acknowledgement; ACID may refer to Application Client Identification; AF may refer to Application Function; AM may refer to Acknowledged Mode; AMBR may refer to Aggregate Maximum Bit Rate; AMF may refer to Access and Mobility Management Function; AN may refer to Access Network; ANR may refer to Automatic Neighbour Relation; AOA may refer to Angle of Arrival; AP may refer to Application Protocol, Antenna Port, Access Point; API may refer to Application Programming Interface; APN may refer to Access Point Name; ARP may refer to Allocation and Retention Priority; ARQ may refer to Automatic Repeat Request; AS may refer to Access Stratum; ASP may refer to Application Service Provider; ASN.1 may refer to Abstract Syntax Notation One; AUSF may refer to Authentication Server Function; AWGN may refer to Additive White Gaussian Noise; BAP may refer to Backhaul Adaptation Protocol; BCH may refer to Broadcast Channel; BER may refer to Bit Error Ratio; BFD may refer to Beam Failure Detection; BLER may refer to Block Error Rate; BPSK may refer to Binary Phase Shift Keying; BRAS may refer to Broadband Remote Access Server; BSS may refer to Business Support System; BS may refer to Base Station; BSR may refer to Buffer Status Report; BW may refer to Bandwidth; BWP may refer to Bandwidth Part; C-RNTI may refer to Cell Radio Network Temporary Identity; CA may refer to Carrier Aggregation, Certification Authority; CAPEX may refer to CAPital Expenditure; CBD may refer to Candidate Beam Detection; CBRA may refer to Contention Based Random Access; CC may refer to Component Carrier, Country Code, Cryptographic Checksum; CCA may refer to Clear Channel Assessment; CCE may refer to Control Channel Element; CCCH may refer to Common Control Channel; CE may refer to Coverage Enhancement; CDM may refer to Content Delivery Network; CDMA may refer to Code-Division Multiple Access; CDR may refer to Charging Data Request; CDR may refer to Charging Data Response; CFRA may refer to Contention Free Random Access; CG may refer to Cell Group; CGF may refer to Charging Gateway Function; CHF may refer to Charging Function; CI may refer to Cell Identity; CID may refer to Cell-ID (e.g., positioning method); CIM may refer to Common Information Model; CIR may refer to Carrier to Interference Ratio ; CK may refer to Cipher Key; CM may refer to Connection Management, Conditional Mandatory; CMAS may refer to Commercial Mobile Alert Service; CMD may refer to Command; CMS may refer to Cloud Management System; CO may refer to Conditional Optional; CoMP may refer to Coordinated Multi-Point; CORESET may refer to Control Resource Set; COTS may refer to Commercial Off-The-Shelf; CP may refer to Control Plane, Cyclic Prefix, Connection Point; CPD may refer to Connection Point Descriptor; CPE may refer to Customer Premise Equipment; CPICH may refer to Common Pilot Channel; CQI may refer to Channel Quality Indicator; CPU may refer to CSI processing unit, Central Processing Unit; C/R may refer to Command/Response field bit; CRAN may refer to Cloud Radio Access Network, Cloud RAN; CRB may refer to Common Resource Block; CRC may refer to Cyclic Redundancy Check; CRI may refer to Channel-State Information Resource Indicator, CSI-RS Resource Indicator; C-RNTI may refer to Cell RNTI; CS may refer to Circuit Switched; CSCF may refer to call session control function; CSAR may refer to Cloud Service Archive; CSI may refer to Channel-State Information; CSI-IM may refer to CSI Interference Measurement; CSI-RS may refer to CSI Reference Signal; CSI-RSRP may refer to CSI reference signal received power; CSI-RSRQ may refer to CSI reference signal received quality; CSI-SINR may refer to CSI signal-to-noise and interference ratio; CSMA may refer to Carrier Sense Multiple Access; CSMA/CA may refer to CSMA with collision avoidance ; CSS may refer to Common Search Space, Cell-specific Search Space; CTF may refer to Charging Trigger Function; CTS may refer to Clear-to-Send; CW may refer to Codeword; CWS may refer to Contention Window Size; D2D may refer to Device-to-Device; DC may refer to Dual Connectivity, Direct Current; DCI may refer to Downlink Control Information; DF may refer to Deployment Flavour; DL may refer to Downlink; DMTF may refer to Distributed Management Task Force; DPDK may refer to Data Plane Development Kit; DM-RS, DMRS may refer to Demodulation Reference Signal; DN may refer to Data network; DNN may refer to Data Network Name; DNAI may refer to Data Network Access Identifier; DRB may refer to Data Radio Bearer; DRS may refer to Discovery Reference Signal; DRX may refer to Discontinuous Reception; DSL may refer to Domain Specific Language. Digital Subscriber Line; DSLAM may refer to DSL Access Multiplexer; DwPTS may refer to Downlink Pilot Time Slot; E-LAN may refer to Ethernet Local Area Network; E2E may refer to End-to-End; EAS may refer to Edge Application Server; ECCA may refer to extended clear channel assessment, extended CCA; ECCE may refer to Enhanced Control Channel Element, Enhanced CCE; ED may refer to Energy Detection; EDGE may refer to Enhanced Datarates for GSM Evolution (GSM Evolution); EAS may refer to Edge Application Server; EASID may refer to Edge Application Server Identification; ECS may refer to Edge Configuration Server; ECSP may refer to Edge Computing Service Provider; EDN may refer to Edge Data Network; EEC may refer to Edge Enabler Client; EECID may refer to Edge Enabler Client Identification; EES may refer to Edge Enabler Server; EESID may refer to Edge Enabler Server Identification; EHE may refer to Edge Hosting Environment; EGMF may refer to Exposure Governance Management Function; EGPRS may refer to Enhanced GPRS ; EIR may refer to Equipment Identity Register; eLAA may refer to enhanced Licensed Assisted Access, enhanced LAA; EM may refer to Element Manager; eMBB may refer to Enhanced Mobile Broadband; EMS may refer to Element Management System; eNB may refer to evolved NodeB, E-UTRAN Node B; EN-DC may refer to E-UTRA-NR Dual Connectivity; EPC may refer to Evolved Packet Core; EPDCCH may refer to enhanced PDCCH, enhanced Physical Downlink Control Cannel; EPRE may refer to Energy per resource element; EPS may refer to Evolved Packet System; EREG may refer to enhanced REG, enhanced resource element groups; ETSI may refer to European Telecommunications Standards Institute; ETWS may refer to Earthquake and Tsunami Warning System; eUICC may refer to embedded UICC, embedded Universal Integrated Circuit Card; E-UTRA may refer to Evolved UTRA; E-UTRAN may refer to Evolved UTRAN; EV2X may refer to Enhanced V2X; F1AP may refer to F1 Application Protocol; F1-C may refer to F1 Control plane interface; F1-U may refer to F1 User plane interface; FACCH may refer to Fast Associated Control CHannel ; FACCH/F may refer to Fast Associated Control Channel/Full rate; FACCH/H may refer to Fast Associated Control Channel/Half rate ; FACH may refer to Forward Access Channel; FAUSCH may refer to Fast Uplink Signalling Channel; FB may refer to Functional Block; FBI may refer to Feedback Information; FCC may refer to Federal Communications Commission; FCCH may refer to Frequency Correction CHannel; FDD may refer to Frequency Division Duplex; FDM may refer to Frequency Division Multiplex; FDMA may refer to Frequency Division Multiple Access; FE may refer to Front End; FEC may refer to Forward Error Correction; FFS may refer to For Further Study; FFT may refer to Fast Fourier Transformation; feLAA may refer to further enhanced Licensed Assisted Access, further enhanced LAA ; FN may refer to Frame Number; FPGA may refer to Field-Programmable Gate Array; FR may refer to Frequency Range; FQDN may refer to Fully Qualified Domain Name may refer to ; G-RNTI may refer to GERAN Radio Network Temporary Identity; GERAN may refer to GSM EDGE RAN, GSM EDGE Radio Access Network; GGSN may refer to Gateway GPRS Support Node; GLONASS may refer to GLObal'naya NAvigatsionnaya Sputnikovaya Sistema (Engl.: Global Navigation Satellite System); gNB may refer to Next Generation NodeB; gNB-CU may refer to gNB-centralized unit, Next Generation NodeB centralized unit; gNB-DU may refer to gNB-distributed unit, Next Generation NodeB distributed unit; GNSS may refer to Global Navigation Satellite System; GPRS may refer to General Packet Radio Service; GPSI may refer to Generic Public Subscription Identifier; GSM may refer to Global System for Mobile Communications, Groupe Spécial Mobile; GTP may refer to GPRS Tunneling Protocol; GTP-U may refer to GPRS Tunnelling Protocol for User Plane; GTS may refer to Go To Sleep Signal (related to WUS); GLTMMEI may refer to Globally Unique MME Identifier; GUTI may refer to Globally Unique Temporary UE Identity; HARQ may refer to Hybrid ARQ, Hybrid Automatic Repeat Request; HANDO may refer to Handover ; HFN may refer to HyperFrame Number; HHO may refer to Hard Handover; HLR may refer to Home Location Register; HN may refer to Home Network; HO may refer to Handover; HPLMN may refer to Home Public Land Mobile Network; HSDPA may refer to High Speed Downlink Packet Access; HSN may refer to Hopping Sequence Number; HSPA may refer to High Speed Packet Access; HSS may refer to Home Subscriber Server; HSUPA may refer to High Speed Uplink Packet Access; HTTP may refer to Hyper Text Transfer Protocol; HTTPS may refer to Hyper Text Transfer Protocol Secure (https is http/1.1 over SSL, i.e. port 443); I-Block may refer to Information Block; ICCID may refer to Integrated Circuit Card Identification; IAB may refer to Integrated Access and Backhaul ; ICIC may refer to Inter-Cell Interference Coordination; ID may refer to Identity, identifier; IDFT may refer to Inverse Discrete Fourier Transform; IE may refer to Information element; IBE may refer to In-Band Emission; IEEE may refer to Institute of Electrical and Electronics Engineers; IEI may refer to Information Element Identifier; IEIDL may refer to Information Element Identifier Data Length; IETF may refer to Internet Engineering Task Force; IF may refer to Infrastructure ; IIOT may refer to Industrial Internet of Things; IM may refer to Interference Measurement, Intermodulation, IP Multimedia; IMC may refer to IMS Credentials; IMEI may refer to International Mobile Equipment Identity; IMGI may refer to International mobile group identity ; IMPI may refer to IP Multimedia Private Identity; IMPU may refer to IP Multimedia PUblic identity; IMS may refer to IP Multimedia Subsystem; IMSI may refer to International Mobile Subscriber Identity; IoT may refer to Internet of Things; IP may refer to Internet Protocol; Ipsec may refer to IP Security, Internet Protocol Security; IP-CAN may refer to IP-Connectivity Access Network; IP-M may refer to IP Multicast; IPv4 may refer to Internet Protocol Version 4; IPv6 may refer to Internet Protocol Version 6; IR may refer to Infrared; IS may refer to In Sync; IRP may refer to Integration Reference Point; ISDN may refer to Integrated Services Digital Network ; ISIM may refer to IM Services Identity Module; ISO may refer to International Organisation for Standardisation; ISP may refer to Internet Service Provider; IWF may refer to Interworking-Function; I-WLAN may refer to Interworking WLAN may refer to Constraint length of the convolutional code, USIM Individual key; kB may refer to Kilobyte (1000 bytes); kbps may refer to kilo-bits per second; Kc may refer to Ciphering key; Ki may refer to Individual subscriber authentication key; KPI may refer to Key Performance Indicator; KQI may refer to Key Quality Indicator; KSI may refer to Key Set Identifier; ksps may refer to kilo-symbols per second; KVM may refer to Kernel Virtual Machine; L1 may refer to Layer 1 (physical layer); L 1-RSRP may refer to Layer 1 reference signal received power; L2 may refer to Layer 2 (data link layer); L3 may refer to Layer 3 (network layer); LAA may refer to Licensed Assisted Access; LAN may refer to Local Area Network; LADN may refer to Local Area Data Network ; LBT may refer to Listen Before Talk; LCM may refer to LifeCycle Management; LCR may refer to Low Chip Rate; LCS may refer to Location Services; LCID may refer to Logical Channel ID; LI may refer to Layer Indicator; LLC may refer to Logical Link Control, Low Layer Compatibility; LMF may refer to Location Management Function; LOS may refer to Line of Sight; LPLMN may refer to Local PLMN; LPP may refer to LTE Positioning Protocol; LSB may refer to Least Significant Bit; LTE may refer to Long Term Evolution; LWA may refer to LTE-WLAN aggregation; LWIP may refer to LTE/WLAN Radio Level Integration with IPsec Tunnel; LTE may refer to Long Term Evolution; M2M may refer to Machine-to-Machine; MAC may refer to Medium Access Control (protocol layering context) ; MAC may refer to Message authentication code (security/encryption context); MAC-A may refer to MAC used for authentication and key agreement (TSG T WG3 context); MAC-I may refer to MAC used for data integrity of signalling messages (TSG T WG3 context); MANO may refer to Management and Orchestration; MBMS may refer to Multimedia Broadcast and Multicast Service; MBSFN may refer to Multimedia Broadcast multicast service Single Frequency Network; MCC may refer to Mobile Country Code; MCG may refer to Master Cell Group; MCOT may refer to Maximum Channel Occupancy Time; MCS may refer to Modulation and coding scheme; MDAF may refer to Management Data Analytics Function; MDAS may refer to Management Data Analytics Service; MDT may refer to Minimization of Drive Tests; ME may refer to Mobile Equipment; MeNB may refer to master eNB; MER may refer to Message Error Ratio; MGL may refer to Measurement Gap Length; MGRP may refer to Measurement Gap Repetition Period; MIB may refer to Master Information Block, Management Information Base; MIMO may refer to Multiple Input Multiple Output; MLC may refer to Mobile Location Centre; MM may refer to Mobility Management; MME may refer to Mobility Management Entity; MN may refer to Master Node; MNO may refer to Mobile Network Operator; MO may refer to Measurement Object, Mobile Originated; MPBCH may refer to MTC Physical Broadcast CHannel; MPDCCH may refer to MTC Physical Downlink Control CHannel; MPDSCH may refer to MTC Physical Downlink Shared CHannel; MPRACH may refer to MTC Physical Random Access CHannel; MPUSCH may refer to MTC Physical Uplink Shared Channel; MPLS may refer to MultiProtocol Label Switching; MS may refer to Mobile Station; MSB may refer to Most Significant Bit; MSC may refer to Mobile Switching Centre; MSI may refer to Minimum System Information, MCH Scheduling Information; MSID may refer to Mobile Station Identifier; MSIN may refer to Mobile Station Identification Number; MSISDN may refer to Mobile Subscriber ISDN Number; MT may refer to Mobile Terminated, Mobile Termination; MTC may refer to Machine-Type Communications; mMTC may refer to massive MTC, massive Machine-Type Communications; MU-MIMO may refer to Multi User MIMO; MWUS may refer to MTC wake-up signal, MTC WUS; NACK may refer to Negative Acknowledgement; NAI may refer to Network Access Identifier; NAS may refer to Non-Access Stratum, Non-Access Stratum layer; NCT may refer to Network Connectivity Topology; NC-JT may refer to Non-Coherent Joint Transmission; NEC may refer to Network Capability Exposure; NE-DC may refer to NR-E-UTRA Dual Connectivity; NEF may refer to Network Exposure Function; NF may refer to Network Function; NFP may refer to Network Forwarding Path; NFPD may refer to Network Forwarding Path Descriptor; NFV may refer to Network Functions Virtualization; NFVI may refer to NFV Infrastructure; NFVO may refer to NFV Orchestrator; NG may refer to Next Generation, Next Gen; NGEN-DC may refer to NG-RAN E-UTRA-NR Dual Connectivity; NM may refer to Network Manager; NMS may refer to Network Management System; N-PoP may refer to Network Point of Presence; NMIB, N-MIB may refer to Narrowband MIB; NPBCH may refer to Narrowband Physical Broadcast CHannel; NPDCCH may refer to Narrowband Physical Downlink Control CHannel; NPDSCH may refer to Narrowband Physical Downlink Shared CHannel; NPRACH may refer to Narrowband Physical Random Access CHannel ; NPUSCH may refer to Narrowband Physical Uplink Shared CHannel ; NPSS may refer to Narrowband Primary Synchronization Signal; NSSS may refer to Narrowband Secondary Synchronization Signal; NR may refer to New Radio, Neighbour Relation; NRF may refer to NF Repository Function; NRS may refer to Narrowband Reference Signal; NS may refer to Network Service; NSA may refer to Non-Standalone operation mode; NSD may refer to Network Service Descriptor; NSR may refer to Network Service Record; NSSAI may refer to Network Slice Selection Assistance Information; S-NNSAI may refer to Single-NSSAI; NSSF may refer to Network Slice Selection Function; NW may refer to Network; NWUS may refer to Narrowband wake-up signal, Narrowband WUS; NZP may refer to Non-Zero Power; O&M may refer to Operation and Maintenance; ODU2 may refer to Optical channel Data Unit - type 2; OFDM may refer to Orthogonal Frequency Division Multiplexing; OFDMA may refer to Orthogonal Frequency Division Multiple Access; OOB may refer to Out-of-band; OOS may refer to Out of Sync; OPEX may refer to OPerating EXpense; OSI may refer to Other System Information; OSS may refer to Operations Support System; OTA may refer to over-the-air; PAPR may refer to Peak-to-Average Power Ratio; PAR may refer to Peak to Average Ratio; PBCH may refer to Physical Broadcast Channel; PC may refer to Power Control, Personal Computer; PCC may refer to Primary Component Carrier, Primary CC; P-CSCF may refer to Proxy CSCF; PCell may refer to Primary Cell; PCI may refer to Physical Cell ID, Physical Cell Identity; PCEF may refer to Policy and Charging Enforcement Function; PCF may refer to Policy Control Function; PCRF may refer to Policy Control and Charging Rules Function; PDCP may refer to Packet Data Convergence Protocol, Packet Data Convergence Protocol layer; PDCCH may refer to Physical Downlink Control Channel; PDCP may refer to Packet Data Convergence Protocol; PDN may refer to Packet Data Network, Public Data Network; PDSCH may refer to Physical Downlink Shared Channel; PDU may refer to Protocol Data Unit; PEI may refer to Permanent Equipment Identifiers; PFD may refer to Packet Flow Description; P-GW may refer to PDN Gateway; PHICH may refer to Physical hybrid-ARQ indicator channel; PHY may refer to Physical layer; PLMN may refer to Public Land Mobile Network; PIN may refer to Personal Identification Number; PM may refer to Performance Measurement; PMI may refer to Precoding Matrix Indicator; PNF may refer to Physical Network Function; PNFD may refer to Physical Network Function Descriptor; PNFR may refer to Physical Network Function Record; POC may refer to PTT over Cellular; PP, PTP may refer to Point-to-Point; PPP may refer to Point-to-Point Protocol; PRACH may refer to Physical RACH; PRB may refer to Physical resource block; PRG may refer to Physical resource block group; ProSe may refer to Proximity Services, Proximity-Based Service; PRS may refer to Positioning Reference Signal; PRR may refer to Packet Reception Radio; PS may refer to Packet Services; PSBCH may refer to Physical Sidelink Broadcast Channel; PSDCH may refer to Physical Sidelink Downlink Channel; PSCCH may refer to Physical Sidelink Control Channel; PSSCH may refer to Physical Sidelink Shared Channel; PSFCH physical sidelink feedback may refer to channel; PSCell may refer to Primary SCell; PSS may refer to Primary Synchronization Signal; PSTN may refer to Public Switched Telephone Network; PT-RS may refer to Phase-tracking reference signal; PTT may refer to Push-to-Talk; PUCCH may refer to Physical Uplink Control Channel; PUSCH may refer to Physical Uplink Shared Channel; QAM may refer to Quadrature Amplitude Modulation; QCI may refer to QoS class of identifier; QCL may refer to Quasi co-location; QFI may refer to QoS Flow ID, QoS Flow Identifier; QoS may refer to Quality of Service; QPSK may refer to Quadrature (Quaternary) Phase Shift Keying; QZSS may refer to Quasi-Zenith Satellite System; RA-RNTI may refer to Random Access RNTI; RAB may refer to Radio Access Bearer, Random Access Burst; RACH may refer to Random Access Channel; RADIUS may refer to Remote Authentication Dial In User Service; RAN may refer to Radio Access Network; RAND may refer to RANDom number (used for authentication); RAR may refer to Random Access Response; RAT may refer to Radio Access Technology; RAU may refer to Routing Area Update; RB may refer to Resource block, Radio Bearer; RBG may refer to Resource block group; REG may refer to Resource Element Group; Rel may refer to Release; REQ may refer to REQuest; RF may refer to Radio Frequency; RI may refer to Rank Indicator; RIV may refer to Resource indicator value; RL may refer to Radio Link; RLC may refer to Radio Link Control, Radio Link Control layer; RLC AM may refer to RLC Acknowledged Mode; RLC UM may refer to RLC Unacknowledged Mode; RLF may refer to Radio Link Failure; RLM may refer to Radio Link Monitoring; RLM-RS may refer to Reference Signal for RLM; RM may refer to Registration Management; RMC may refer to Reference Measurement Channel; RMSI may refer to Remaining MSI, Remaining Minimum System Information; RN may refer to Relay Node; RNC may refer to Radio Network Controller; RNL may refer to Radio Network Layer; RNTI may refer to Radio Network Temporary Identifier; ROHC may refer to RObust Header Compression; RRC may refer to Radio Resource Control, Radio Resource Control layer; RRM may refer to Radio Resource Management; RS may refer to Reference Signal; RSRP may refer to Reference Signal Received Power; RSRQ may refer to Reference Signal Received Quality; RSSI may refer to Received Signal Strength Indicator; RSU may refer to Road Side Unit; RSTD may refer to Reference Signal Time difference; RTP may refer to Real Time Protocol; RTS may refer to Ready-To-Send; RTT may refer to Round Trip Time; Rx may refer to Reception, Receiving, Receiver; S1AP may refer to S1 Application Protocol; S1-MME may refer to S1 for the control plane; S1-U may refer to S 1 for the user plane; S-CSCF may refer to serving CSCF; S-GW may refer to Serving Gateway; S-RNTI may refer to SRNC Radio Network Temporary Identity; S-TMSI may refer to SAE Temporary Mobile Station Identifier; SA may refer to Standalone operation mode; SAE may refer to System Architecture Evolution; SAP may refer to Service Access Point; SAPD may refer to Service Access Point Descriptor; SAPI may refer to Service Access Point Identifier; SCC may refer to Secondary Component Carrier, Secondary CC; SCell may refer to Secondary Cell; SCEF may refer to Service Capability Exposure Function; SC-FDMA may refer to Single Carrier Frequency Division Multiple Access; SCG may refer to Secondary Cell Group; SCM may refer to Security Context Management; SCS may refer to Subcarrier Spacing; SCTP may refer to Stream Control Transmission Protocol; SDAP may refer to Service Data Adaptation Protocol, Service Data Adaptation Protocol layer; SDL may refer to Supplementary Downlink; SDNF may refer to Structured Data Storage Network Function; SDP may refer to Session Description Protocol; SDSF may refer to Structured Data Storage Function; SDT may refer to Small Data Transmission; SDU may refer to Service Data Unit; SEAF may refer to Security Anchor Function; SeNB may refer to secondary eNB; SEPP may refer to Security Edge Protection Proxy; SFI may refer to Slot format indication; SFTD may refer to Space-Frequency Time Diversity, SFN and frame timing difference; SFN may refer to System Frame Number; SgNB may refer to Secondary gNB; SGSN may refer to Serving GPRS Support Node; S-GW may refer to Serving Gateway ; SI may refer to System Information; SI-RNTI may refer to System Information RNTI; SIB may refer to System Information Block; SIM may refer to Subscriber Identity Module; SIP may refer to Session Initiated Protocol; SiP may refer to System in Package; SL may refer to Sidelink; SLA may refer to Service Level Agreement; SM may refer to Session Management; SMF may refer to Session Management Function; SMS may refer to Short Message Service; SMSF may refer to SMS Function; SMTC may refer to SSB-based Measurement Timing Configuration ; SN may refer to Secondary Node, Sequence Number; SoC may refer to System on Chip; SON may refer to Self-Organizing Network; SpCell may refer to Special Cell; SP-CSI-RNTISemi-Persistent CSI RNTI may refer to ; SPS may refer to Semi-Persistent Scheduling; SQN may refer to Sequence number; SR may refer to Scheduling Request; SRB may refer to Signalling Radio Bearer; SRS may refer to Sounding Reference Signal; SS may refer to Synchronization Signal; SSB may refer to Synchronization Signal Block; SSID Service Set Identifier may refer to ; SS/PBCH may refer to Block ; SSBRI may refer to SS/PBCH Block Resource Indicator, Synchronization Signal Block Resource Indicator; SSC may refer to Session and Service Continuity; SS-RSRP may refer to Synchronization Signal based Reference Signal Received Power; SS-RSRQ may refer to Synchronization Signal based Reference Signal Received Quality; SS-SINR may refer to Synchronization Signal based Signal to Noise and Interference Ratio; SSS may refer to Secondary Synchronization Signal; SSSG may refer to Search Space Set Group; SSSIF may refer to Search Space Set Indicator; SST may refer to Slice/Service Types; SU-MIMO may refer to Single User MIMO; SUL may refer to Supplementary Uplink; TA may refer to Timing Advance, Tracking Area; TAC may refer to Tracking Area Code; TAG may refer to Timing Advance Group; TAI may refer to Tracking Area Identity; TAU may refer to Tracking Area Update; TB may refer to Transport Block; TBS may refer to Transport Block Size; TBD may refer to To Be Defined; TCI may refer to Transmission Configuration Indicator; TCP may refer to Transmission Communication Protocol; TDD may refer to Time Division Duplex; TDM may refer to Time Division Multiplexing; TDMA may refer to Time Division Multiple Access; TE may refer to Terminal Equipment; TEID may refer to Tunnel End Point Identifier; TFT may refer to Traffic Flow Template; TMSI may refer to Temporary Mobile Subscriber Identity; TNL may refer to Transport Network Layer; TPC may refer to Transmit Power Control; TPMI may refer to Transmitted Precoding Matrix Indicator; TR may refer to Technical Report; TRP, TRxP may refer to Transmission Reception Point; TRS may refer to Tracking Reference Signal; TRx may refer to Transceiver; TS may refer to Technical Specifications, Technical Standard; TTI may refer to Transmission Time Interval; Tx may refer to Transmission, Transmitting, Transmitter; U-RNTI may refer to UTRAN Radio Network Temporary Identity; UART may refer to Universal Asynchronous Receiver and Transmitter; UCI may refer to Uplink Control Information; UE may refer to User Equipment; UDM may refer to Unified Data Management; UDP may refer to User Datagram Protocol; UDSF may refer to Unstructured Data Storage Network Function; UICC may refer to Universal Integrated Circuit Card; UL may refer to Uplink; UM may refer to Unacknowledged Mode; UML may refer to Unified Modelling Language; UMTS may refer to Universal Mobile Telecommunications System; UP may refer to User Plane; UPF may refer to User Plane Function; URI may refer to Uniform Resource Identifier; URL may refer to Uniform Resource Locator ; URLLC may refer to Ultra-Reliable and Low Latency; USB may refer to Universal Serial Bus; USIM may refer to Universal Subscriber Identity Module; USS may refer to UE-specific search space; UTRA may refer to UMTS Terrestrial Radio Access; UTRAN may refer to Universal Terrestrial Radio Access Network; UwPTS may refer to Uplink Pilot Time Slot; V2I may refer to Vehicle-to-Infrastruction; V2P may refer to Vehicle-to-Pedestrian; V2V may refer to Vehicle-to-Vehicle ; V2X may refer to Vehicle-to-everything; VIM may refer to Virtualized Infrastructure Manager; VL may refer to Virtual Link, ; VLAN may refer to Virtual LAN, Virtual Local Area Network; VM may refer to Virtual Machine; VNF may refer to Virtualized Network Function; VNFFG may refer to VNF Forwarding Graph; VNFFGD may refer to VNF Forwarding Graph Descriptor; VNFM may refer to VNF Manager ; VoIP may refer to Voice-over-IP, Voice-over-Internet Protocol; VPLMN may refer to Visited Public Land Mobile Network; VPN may refer to Virtual Private Network ; VRB may refer to Virtual Resource Block; WiMAX may refer to Worldwide Interoperability for Microwave Access; WLAN may refer to Wireless Local Area Network; WMAN may refer to Wireless Metropolitan Area Network; WPAN may refer to Wireless Personal Area Network; X2-C may refer to X2-Control plane; X2-U may refer to X2-User plane; XML may refer to eXtensible Markup Language ; XRES may refer to EXpected user RESponse; XOR may refer to eXclusive OR; ZC may refer to Zadoff-Chu; ZP may refer to Zero Power;

### Terminology

For the purposes of the present document, the following terms and definitions are applicable to the examples and embodiments discussed herein.

The term "application" may refer to a complete and deployable package, environment to achieve a certain function in an operational environment.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by SSB-MeasurementTimingConfiguration.

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

## Claims

1. An apparatus of a User Equipment (UE) for mobile communication, the apparatus comprising a radio frequency (RF) interface and one or more processors coupled to the RF interface, the one or more processors configured to:
identify, from a base station, information representative of an uplink and downlink (UL/DL) resource configuration related to a full duplex communication with the base station;
identify a sub-band of a plurality of sub-bands of a carrier bandwidth as one of a sub-band for DL or a sub-band of UL, based on the UL/DL resource configuration;
cause the UE to receive or transmit within a resource of the sub-band based on the identification of the sub-band.

2. The apparatus of claim 1,
wherein the full duplex communication comprises one of a non-overlapping sub-band full duplex communication (NOSB-FD) or sub-band full duplex communication (SB-FD).

3. The apparatus of claim 2,
wherein the information is provided to the UE via a cell specific higher layer signaling; wherein the UL/DL resource configuration is specific to the serving cell.

4. The apparatus of claim 2,
wherein the information is provided to the UE via a UE specific higher layer signaling; wherein the UL/DL resource configuration is at least one of: specific to the serving cell or specific to a configured bandwidth part (BWP) for the UE.

5. The apparatus of claim 2,
wherein the UL/DL resource configuration is provided to the UE via a dynamic Layer 1 signaling; wherein the UL/DL resource configuration is at least one of: specific to the serving cell or specific to a configured bandwidth part (BWP) for the UE.

6. The apparatus of any one of claims 1 to 5,
wherein the UL/DL resource configuration is representative of at least one of one or more first sub-bands of a bandwidth for UL in a time resource and one or more second sub-bands of the bandwidth for DL in the time resource, the one or more second sub-bands different from the one or more first sub-bands.

7. The apparatus of any one of claims 1 to 6,
wherein the UL/DL resource configuration comprises a configuration of a sub-band; wherein the sub-band is represented by a reference frequency or a common resource block 0 and a reference subcarrier spacing.

8. The apparatus of any one of claims 1 to 6,
wherein the UL/DL resource configuration comprises a configuration of a sub-band; wherein the sub-band is represented by a start physical resource block (PRB) and bandwidth information.

9. The apparatus of any one of claims 1 to 8,
wherein the one or more processors are further configured identify a flexible resource in which the UE is capable to either transmit or receive based on the UL/DL resource configuration.

10. The apparatus of any one of claims 1 to 9,
wherein the UL/DL resource configuration further comprises symbol information representative of UL/DL resource configuration in time domain.

11. The apparatus of any one of claims 1 to 10,
wherein the one or more processors are further configured to identify symbol information representative of UL/DL resource configuration in time domain from further information received via at least one of a cell specific higher layer signaling; a UE specific higher layer signaling, or a dynamic signaling.

12. The apparatus of claim 10 or claim 11,
wherein the one or more processors are further configured to cause the UE to receive or transmit within the resource of the sub-band based on the symbol information associated with the resource.

13. The apparatus of any one of claims 1 to 12,
wherein the one or more processors are further configured to determine a guard band specific to the sub-band based on the UL/DL resource configuration.

14. A method to be performed by a User Equipment (UE), the method comprising:
identifying, from a base station, information representative of an uplink and downlink (UL/DL) resource configuration related to a full duplex communication with the base station;
identifying a sub-band of a plurality of sub-bands of a carrier bandwidth as one of a sub-band for DL or a sub-band of UL, based on the UL/DL resource configuration;
receiving or transmitting within a resource of the sub-band based on the identification of the sub-band.

15. A non-transitory computer-readable medium comprising one or more instructions which, if executed by a processor, cause the processor to perform the method of claim 14.
